(19) **Europäisches Patentamt / European Patent Office / Office européen des brevets**

(11) **EP 4 696 575 A1**

(12) # EUROPEAN PATENT APPLICATION
published in accordance with Art. 153(4) EPC

(43) Date of publication:
**18.02.2026 Bulletin 2026/08**

(21) Application number: **24806429.7**

(22) Date of filing: **08.05.2024**

(51) International Patent Classification (IPC):
**B60W 30/06** (2006.01)   **B60W 10/08** (2006.01)
**B60W 10/20** (2006.01)

(52) Cooperative Patent Classification (CPC):
**B60W 10/08; B60W 10/20; B60W 30/06;**
**Y02T 10/72**

(86) International application number:
**PCT/CN2024/091778**

(87) International publication number:
**WO 2024/235077 (21.11.2024 Gazette 2024/47)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **16.05.2023 CN 202310556765**

(71) Applicant: **Shenzhen Yinwang Intelligent**
**Technologies Co., Ltd.**
**Shenzhen, Guangdong 518110 (CN)**

(72) Inventors:
• **LIU, Hanwen**
  **Shenzhen, Guangdong 518129 (CN)**
• **XU, Yan**
  **Shenzhen, Guangdong 518129 (CN)**
• **DUAN, Zhilin**
  **Shenzhen, Guangdong 518129 (CN)**
• **LI, Jianhui**
  **Shenzhen, Guangdong 518129 (CN)**
• **LI, Yuhao**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) ## PARKING CONTROL SYSTEM, METHOD AND APPARATUS, AND ELECTRONIC DEVICE AND STORAGE MEDIUM

(57)     A parking control system (300), method, and apparatus (800 and 900), an electronic device, and a storage medium are disclosed. In the parking control system (300), a main control unit (201) sends target wheel rotation information to a motor control unit (202) during parking of a vehicle. The motor control unit (202) determines a drive electrical signal corresponding to the target wheel rotation information, sends the drive electrical signal to a motor (203), and corrects a subsequent drive electrical signal based on motor rotation information collected by a motor sensor (205).

FIG. 3

EP 4 696 575 A1

**Description**

CROSS-REFERENCE TO RELATED APPLICATIONS

This application claims priority to Chinese Patent Application No. 202310556765.2, filed with the China National Intellectual Property Administration on May 16, 2023 and entitled "PARKING CONTROL SYSTEM, METHOD, AND APPARATUS, ELECTRONIC DEVICE, AND STORAGE MEDIUM", which is incorporated herein by reference in its entirety.

TECHNICAL FIELD

This application relates to the field of electronic technologies, and in particular, to a parking control system, method, and apparatus, an electronic device, and a storage medium.

BACKGROUND

Parking is a technology that enables a vehicle to travel into a parking space in a low-speed traveling scenario, including full-automatic parking assist, semi-automatic parking assist, and manual parking. During full-automatic parking assist, a user only needs to perform one-button remote control on a vehicle-mounted display, a mobile phone, a remote control, or another device, to enable a vehicle to automatically park into an empty parking space under the control of an in-vehicle sensor and an onboard control system. During full-automatic parking assist, the user does not need to perform a manual operation, or the user even does not need to sit in the vehicle. This creates more intelligent and convenient experience for the user.

However, currently, in both automatic parking assist and manual parking, a parking control delay is long, and parking control precision is poor. When road surface disturbance occurs, closed-loop control cannot be quickly performed. Consequently, a series of problems such as oversteering, vehicle pitching, parking hesitation, and excessive number of gear changes are likely to occur, affecting parking experience of a user.

Therefore, currently, a parking control solution for a vehicle needs to be further studied.

SUMMARY

This application provides a parking control system, method, and apparatus, an electronic device, and a storage medium, to cope with a long parking control delay and poor parking control precision in an existing parking control solution.

According to a first aspect, this application provides a parking control system. The system includes a main control unit, a motor control unit, a motor, and a motor sensor. The main control unit, the motor control unit, and the motor are electrically connected in sequence, and the motor control unit is further electrically connected to the motor sensor. The main control unit is configured to send target wheel rotation information to the motor control unit during parking of a vehicle. The motor is configured to rotate under the action of a drive electrical signal of the motor control unit, where the rotation is used to drive a wheel of the vehicle to rotate. The motor control unit is configured to send a first drive electrical signal to the motor based on the target wheel rotation information. The motor sensor is configured to send collected motor rotation information of the motor to the motor control unit. The motor control unit is further configured to send a second drive electrical signal to the motor based on the motor rotation information and the target wheel rotation information.

In the foregoing parking control system, a closed-loop control policy for parking is executed on the motor control unit side, so that an entire closed-loop control link needs to pass through only three components: the motor control unit, the motor, and the motor sensor. A path of the closed-loop control link is short, and a short closed-loop control delay is needed. In this way, even if road surface disturbance occurs during parking, closed-loop control can be quickly performed due to a short closed-loop control delay. This effectively avoids the following phenomena for the vehicle: parking hesitation, vehicle pitching, oversteering after the vehicle crosses an obstacle, and the like. In addition, a drive electrical signal is corrected by using the motor rotation information collected by the motor sensor. Therefore, precision of closed-loop control can be further improved by using features of high collection precision and a short collection time interval of the motor sensor, to improve parking control precision, reduce a quantity of mistakes during parking, and further reduce a corresponding number of gear changes.

In a possible design, the first drive electrical signal is a drive electrical signal determined based on the target wheel rotation information. Specifically, the motor control unit may query a preset mapping relationship between wheel rotation information and a drive electrical signal based on the target wheel rotation information, to obtain the first drive electrical signal corresponding to the target wheel rotation information. The preset mapping relationship between wheel rotation information and a drive electrical signal may be locally stored in the motor control unit; or may be stored in another component of an electronic device in which the motor control unit is located, an external memory, or another device, and is read by the motor control unit from the another component, the external memory, or the another device for use as needed. In this way, the mapping relationship between wheel rotation information and a drive electrical signal is configured, so that the first drive electrical signal corresponding to the target wheel rotation information can be quickly determined by directly querying the mapping relationship, to increase a drive control speed.

In a possible design, the second drive electrical signal is a drive electrical signal obtained through correction based on the target wheel rotation information and the motor rotation information. Specifically, the motor control unit may convert the motor rotation information into current wheel rotation information, and then input the current wheel rotation information and the target wheel rotation information to a preset closed-loop control algorithm, and obtain next-step wheel rotation information output by the closed-loop control algorithm; and then may query the preset mapping relationship between wheel rotation information and a drive electrical signal to obtain a next-step drive electrical signal corresponding to the next-step wheel rotation information, and send the drive electrical signal to the motor as the second drive electrical signal. In this way, the second drive electrical signal is determined by using the current wheel rotation information and the target wheel rotation information, so that a current drive electrical signal can be corrected based on an actual movement status of the vehicle, to enable a vehicle speed of the vehicle to gradually approach a vehicle speed corresponding to the target wheel rotation information.

In a possible design, the target wheel rotation information may include a target rotational speed of the wheel and/or a target rotation angle of the wheel. Precision of the rotation angle is higher than precision of the rotational speed. Therefore, in a scenario with a high parking precision requirement, the target wheel rotation information may be configured to include the target rotation angle of the wheel, to meet a high requirement for parking control precision based on the rotation angle with higher precision. In a scenario with a low requirement for parking precision, the target wheel rotation information may be configured to include the target rotational speed of the wheel, to reduce power consumption and system complexity while meeting the precision requirement.

In a possible design, the motor rotation information may include a rotational speed of the motor and/or a rotation angle of the motor. For example, both the target wheel rotation information and the motor rotation information may be configured as rotational speeds or rotation angles. In this way, the motor control unit can directly adjust a drive electrical signal based on the motor rotation information and the target wheel rotation information, to reduce a delay needed by intermediate unit conversion.

In a possible design, if automatic parking assist is configured for the vehicle, the main control unit is specifically configured to receive an automatic parking assist request, and determine that the vehicle is to park. In this design, a trigger condition for enabling the parking control policy in the automatic parking assist mode is provided, so that the parking control policy is applicable to the automatic parking assist mode.

In a further design, the main control unit is specifically configured to: during parking of the vehicle, first, input a current location of the vehicle and a location of a target parking space to a preset trajectory planning algorithm, and obtain a parking trajectory output by the trajectory planning algorithm, where the parking trajectory includes a vehicle speed and a vehicle turning angle that are needed at each step for the vehicle to park into the target parking space from the current location; and then determine a target vehicle speed and a target vehicle turning angle based on the parking trajectory, send the target vehicle turning angle to a steering mechanism of the vehicle, determine, based on a preset mapping relationship between a vehicle speed and wheel rotation information, target wheel rotation information corresponding to the target vehicle speed, and send the target wheel rotation information to the motor control unit.

For example, the vehicle turning angle may be either of a turning angle of a steering wheel or a turning angle of the steering mechanism. For example, in a scenario in which the vehicle has a steering wheel, the vehicle turning angle may be specifically a turning angle of the steering wheel. After the turning angle of the steering wheel is sent to the steering mechanism, the steering mechanism may convert the turning angle into a turning angle of the steering mechanism based on a preset proportional conversion relationship, and then control steering of the wheel. In a scenario in which the vehicle has no steering wheel, the vehicle turning angle may be specifically a turning angle of the steering mechanism. After the turning angle is sent to the steering mechanism, the steering mechanism may directly control steering of the wheel.

In the foregoing design, the target vehicle speed obtained through trajectory planning during automatic parking assist is converted into the target wheel rotation information needed by the parking control policy, so that the parking control policy is applicable to the automatic parking assist mode.

In a possible design, if manual parking is configured for the vehicle, when determining that a status of the vehicle meets at least one of the following conditions, the main control unit may determine that the vehicle is to park: A vehicle speed is lower than a preset vehicle speed, a rotational speed of a motor is lower than a preset rotational speed, a torque requested by a driver is less than a torque threshold, a change rate of the torque requested by the driver is less than a first change rate threshold, an opening degree of an accelerator pedal is less than a first opening degree threshold, a change rate of the opening degree of the accelerator pedal is less than a second change rate threshold, an opening degree of a brake pedal is greater than a second opening degree threshold, and a change rate of the opening degree of the brake pedal is less than a third change rate threshold.

In the foregoing design, when a travel speed of the vehicle is low, the rotational speed of the motor of the vehicle is low, an accelerator of the vehicle has not been stepped on for a long time or has been gently stepped on for a long time, and a brake of the vehicle has been heavily stepped on for a long time, it can be considered that the vehicle is to park. In this way, whether the vehicle is in a parking state is determined based on a combination of a plurality of vehicle statuses such as the vehicle speed, the rotational speed of the motor, the requested torque, the change rate of the requested torque, the opening degree of the accelerator pedal, the change rate of the opening degree of the accelerator pedal, the opening degree of the brake pedal, and the change rate of the opening degree of the brake pedal, so that a determining result can be more fine-grained and accurate.

In a further design, the main control unit is specifically configured to: during parking of the vehicle, determine, by querying a preset mapping relationship between an opening degree of a pedal and a torque, a target torque corresponding to a current opening degree of a pedal of the vehicle, and determine, by querying a preset mapping relationship between a torque and wheel rotation information, target wheel rotation information corresponding to the target torque. In the preset mapping relationship between an opening degree of a pedal and a torque, the opening degree of the pedal may be specifically the opening degree of the accelerator pedal. After obtaining a current opening degree of the accelerator pedal of the vehicle, the main control unit may determine, by querying a preset mapping relationship between the opening degree of the accelerator pedal and a torque, a target torque corresponding to the current opening degree of the accelerator pedal.

In the foregoing design, the preset mapping relationship between an opening degree of a pedal and a torque is an existing mapping relationship in a torque control mode of an existing MCU, and the preset mapping relationship between a torque and wheel rotation information is an additionally specified mapping relationship. In this design, the existing mapping relationship can be used to implement a rotational speed/rotation angle-based parking control mode while minimizing a change in an existing configuration of the main control unit.

In a further design, after determining the target torque corresponding to the current opening degree of the pedal of the vehicle, and before determining, by querying the preset mapping relationship between a torque and wheel rotation information, the target wheel rotation information corresponding to the target torque, if determining that a travel mode of the vehicle is configured to be a first mode, where a crawl torque corresponding to the first mode is greater than the target torque, the main control unit may use the crawl torque as the target torque. When the vehicle is configured to be in the first mode, even if the accelerator pedal and the brake pedal of the vehicle have no opening degrees (to be specific, opening degrees are 0), the vehicle can still travel at a vehicle speed corresponding to the crawl torque. In some scenarios, the first mode is also referred to as a comfort mode, an economic mode, a normal mode, a custom mode, or the like. Alternatively, in some other scenarios, for example, in a sport mode, a dynamic mode, or a radical mode, a corresponding crawl torque may also be configured. In this case, the vehicle may also correct the target torque based on the corresponding crawl torque in these modes.

In the foregoing design, arbitration is performed on the target torque by using the crawl torque, to ensure that the vehicle travels at a vehicle speed not lower than the vehicle speed corresponding to the crawl torque. Even in a parking mode, it can still be ensured that a vehicle speed of the vehicle meets a requirement of a current travel mode.

In a further design, the preset mapping relationship between a torque and wheel rotation information may include a mapping relationship between a torque and wheel rotation information that corresponds to the first mode and a mapping relationship between a torque and wheel rotation information that corresponds to a second mode. In a mapping relationship between a torque and wheel rotation information that corresponds to either travel mode, one torque range corresponds to one piece of rotation information. A width of a torque range in the mapping relationship between a torque and wheel rotation information that corresponds to the second mode is less than a width of a torque range in the mapping relationship between a torque and wheel rotation information that corresponds to the first mode. The main control unit is specifically configured to determine, by querying a mapping relationship between a torque and wheel rotation information that corresponds to the travel mode of the vehicle, the target wheel rotation information corresponding to the target torque.

In the foregoing design, mapping relationships corresponding to different travel modes are configured, so that target wheel rotation information corresponding to a current travel mode of the vehicle can be more precisely determined. For example, if the vehicle is configured to be in the second mode, the determined target wheel rotation information can be used to more quickly perform adjustment to the target vehicle speed, to meet a quick adjustment requirement in the second mode; or if the vehicle is configured to be in the first mode, the determined target wheel rotation information can be used to smoothly perform adjustment to the target vehicle speed, to meet a user experience requirement in the first mode. In some scenarios, the first mode may be the comfort mode, the economic mode, the normal mode, the custom mode, or the like, and the second mode may be the sport mode, the dynamic mode, the radical mode, or the like.

In a further design, after determining the target wheel rotation information corresponding to the target torque, and before sending the target wheel rotation information to the motor control unit, the main control unit may further correct the target wheel rotation information by using current vehicle speed information of the vehicle, where corrected target wheel rotation information is between wheel rotation information corresponding to the current vehicle speed information of the vehicle and the target wheel rotation information existing before the correction. In this way, a rotational speed of the wheel can be smoothly adjusted during parking control, to avoid sudden acceleration or deceleration of the vehicle, and improve driving experience of a user.

In a possible design, the motor control unit is specifically configured to: first, determine, by querying a preset mapping relationship between wheel rotation information and a drive electrical signal, a target drive electrical signal corresponding to the target wheel rotation information; then query a preset transition gradient table based on the target drive electrical signal and a current drive electrical signal of the motor, and determine transition drive electrical signals needed for converting the current drive electrical signal of the motor into the target drive electrical signal; and then sequentially send the transition drive electrical signals to the motor.

In the foregoing design, the transition drive electrical signals are used to drive the motor to rotate, so that a rotational speed of the motor can be gradually adjusted to a target rotational speed, to avoid a sudden increase or decrease in the rotational speed of the motor. This helps improve travel stability of the vehicle.

In a further design, the preset transition gradient table includes a transition gradient table corresponding to the first mode and a transition gradient table corresponding to the second mode, and the motor control unit is specifically configured to query, based on the target drive electrical signal and the current drive electrical signal of the motor, a transition gradient table corresponding to the travel mode of the vehicle, and determine the transition drive electrical signals.

In the foregoing design, transition gradient tables corresponding to different travel modes are configured, so that a transition drive electrical signal corresponding to a current travel mode of the vehicle can be more precisely determined. For example, if the vehicle is configured to be in the second mode, the determined transition drive electrical signal can more quickly adjust the rotational speed of the motor to a corresponding target motor rotational speed, to meet a quick adjustment requirement in the second mode; or if the vehicle is configured to be in the first mode, the determined transition drive electrical signal can smoothly adjust the rotational speed of the motor to a corresponding target motor rotational speed, to meet a user experience requirement in the first mode.

In a possible design, the parking control system may further include a wheel sensor. The main control unit is further configured to: after the vehicle ends parking, determine target torque information corresponding to the target wheel rotation information, and send the target torque information to the motor control unit. The motor control unit is further configured to send a third drive electrical signal to the motor based on the target torque information. The wheel sensor is configured to send collected rotation information of the wheel to the main control unit. The main control unit is further configured to correct the target torque information based on the rotation information of the wheel and the target wheel rotation information, and send corrected target torque information to the motor control unit.

In the foregoing design, after parking ends, switching is performed back to a default torque control mode. In this way, in a non-parking scenario, it can be further ensured that there is sufficient time between a moment at which the user steps on a pedal and a moment at which the user is aware of a response of the vehicle, to improve driving experience of the user.

In a further design, if automatic parking assist is configured for the vehicle, when determining that a status of the vehicle meets at least one of the following conditions, the main control unit determines that the vehicle ends parking: An opening degree of an accelerator pedal is greater than 0; an opening degree of a brake pedal is greater than a preset opening degree threshold, and the preset opening degree threshold is greater than 0; a steering wheel is turned; a parking position is used; and a parking end request is received. In this way, some trigger conditions for ending the automatic parking assist are provided. Regardless of whether the automatic parking assist ends or the automatic parking assist is interrupted, switching can be quickly performed back to the torque control mode, to provide support for switching between the rotational speed/rotation angle control mode and the default torque control mode that are used during automatic parking assist.

In a further design, if manual parking is configured for the vehicle, when determining that the status of the vehicle meets at least one of the following conditions, the main control unit determines that the vehicle ends parking: The vehicle speed is not lower than the preset vehicle speed, the rotational speed of the motor is not lower than the preset rotational speed, the torque requested by the driver is not less than the torque threshold, the change rate of the torque requested by the driver is not less than the first change rate threshold, the opening degree of the accelerator pedal is not less than the first opening degree threshold, the change rate of the opening degree of the accelerator pedal is not less than the second change rate threshold, the opening degree of the brake pedal is not greater than the second opening degree threshold, and the change rate of the opening degree of the brake pedal is not less than the third change rate threshold. In this way, some trigger conditions for ending the manual parking are provided. Regardless of whether the manual parking ends or the manual parking is interrupted, switching can also be quickly performed back to the torque control mode, to provide support for switching between the rotational speed/rotation angle control mode and the default torque control mode that are used during manual parking.

According to a second aspect, this application provides a parking control method. The method is applicable to any apparatus with a control capability. Specifically, the apparatus may be a main control unit in a vehicle. The main control unit may include one or more control units. For example, the main control unit may be a vehicle control unit (vehicle control unit, VCU), a vehicle dynamics control (vehicle dynamics control, VDC) system, or an intelligent driving computing center (mobile data center, MDC), or may be an integration of at least two of a VCU, a VDC, or an MDC. Alternatively, the main control unit may be a chip, a chip system, a circuit, or a circuit system that can support a main control unit in implementing a corresponding function, for example, some or all of circuits disposed in a VCU, a VDC, or an MDC. In addition, the vehicle usually further includes a motor control unit. Two control modes are configured in the motor control unit: a rotational speed/rotation angle control mode and a torque control mode. Based on the two control modes of the motor control unit, the method includes:

The main control unit sends a first control signal to the motor control unit during parking of the vehicle, where the first control signal is used to indicate the motor control unit to switch to the rotational speed/rotation angle control mode. The main control unit sends a second control signal to the motor control unit when the vehicle is not parking, where the second control signal is used to indicate the motor control unit to switch to the torque control mode.

In the foregoing design, the motor control unit may switch to the rotational speed/rotation angle control mode during parking. In this way, the motor control unit can control, by using a received wheel rotational speed/wheel rotation angle, a motor to stably remain at a specific rotational speed, and can further accurately and quickly correct a next-step rotational speed of the motor by using an actual rotational speed of the motor that is collected by a motor sensor at high collection frequency, to implement efficient and high-precision control during parking, reduce a quantity of mistakes during parking, and further reduce a corresponding number of gear changes. In addition, the motor control unit may alternatively switch to the torque control mode when the vehicle is not parking, so that the motor control unit can control, within specific buffer time by using a received torque, the motor to rotate. In this way, when the vehicle is not parking, specific time is reserved between a moment at which a driver steps on a pedal and a moment at which the driver is aware of a change in a vehicle speed, to improve driving experience of the driver.

In a possible design, that the main control unit sends the second control signal to the motor control unit when the vehicle is not parking includes: The main control unit sends the second control signal to the motor control unit after the vehicle ends parking.

In this application, when the vehicle is configured to be in different parking modes, a condition for triggering the main control unit to send a control signal also varies. Details are as follows.

Automatic parking assist mode

In a possible design, if the vehicle is configured to be in the automatic parking assist mode, the main control unit may send the first control signal to the motor control unit when receiving an automatic parking assist request.

In a possible design, if the vehicle is configured to be in the automatic parking assist mode, the main control unit may send the second control signal to the motor control unit when determining that a status of the vehicle meets at least one of the following conditions: An opening degree of an accelerator pedal is greater than 0; an opening degree of a brake pedal is greater than a preset opening degree threshold, and the preset opening degree threshold is greater than 0; a steering wheel is turned; a parking position is used; and a parking end request is received.

It should be noted that, when the vehicle is configured to be in the automatic parking assist mode, the main control unit may be considered as an integration of the VCU and the MDC. After receiving the automatic parking assist request, the VCU sends first indication information to the MDC, and the MDC takes over all operations of the VCU based on the first indication information. For example, the MDC may send the first control signal to the motor control unit, to indicate the motor control unit to switch to the rotational speed/rotation angle control mode. The MDC may further send a target rotational speed or a target rotation angle of a wheel to the motor control unit, to indicate the motor control unit to control, in the rotational speed/rotation angle control mode based on the target rotational speed or the target rotation angle of the wheel, the motor to rotate. Correspondingly, when detecting that the vehicle no longer continues to park, for example, when detecting that the vehicle has an intention to end parking, the MDC may send second indication information to the VCU, and the VCU takes over all operations of the MDC again based on the second indication information. For example, the VCU may send the second control signal to the motor control unit, to indicate the motor control unit to switch to the torque control mode. The VCU may further send a target torque to the motor control unit, to indicate the motor control unit to control, in the torque control mode based on the target torque, the motor to rotate.

Manual parking mode

In a possible design, if the vehicle is configured to be in the manual parking mode, the main control unit may send the first control signal to the motor control unit when determining that a status of the vehicle meets at least one of the following conditions: A vehicle speed is lower than a preset vehicle speed, a rotational speed of the motor is lower than a preset rotational speed, a torque requested by the driver is less than a torque threshold, a change rate of the torque requested by the driver is less than a first change rate threshold, an opening degree of an accelerator pedal is less than a first opening degree threshold, a change rate of the opening degree of the accelerator pedal is less than a second change rate threshold, an opening degree of a brake pedal is greater than a second opening degree threshold, and a change rate of the opening degree of the brake pedal is less than a third change rate threshold.

In a possible design, if the vehicle is configured to be in the manual parking mode, the main control unit may send the second control signal to the motor control unit when determining that a status of the vehicle meets at least one of the following conditions: A vehicle speed is not lower than a preset vehicle speed, a rotational speed of the motor is not lower than a preset rotational speed, a torque requested by the driver is not less than a torque threshold, a change rate of the torque requested by the driver is not less than a first change rate threshold, an opening degree of an accelerator pedal is not less than a first opening degree threshold, a change rate of the opening degree of the accelerator pedal is not less than a second change rate threshold, an opening degree of a brake pedal is not greater than a second opening degree threshold, and a change rate of the opening degree of the brake pedal is not less than a third change rate threshold.

It should be noted that when the vehicle is configured to be in the manual parking mode, the main control unit may be the VCU. When detecting that the status of the vehicle meets a parking trigger condition, the VCU may send the first control signal to the motor control unit, to indicate the motor control unit to switch to the rotational speed/rotation angle control mode. The VCU may further send a target rotational speed or a target rotation angle of a wheel to the motor control unit, to indicate the motor control unit to control, in the rotational speed/rotation angle control mode based on the target rotational speed or the target rotation angle of the wheel, the motor to rotate. Correspondingly, when detecting that the status of the vehicle meets a parking ending trigger condition, the VCU may send the second control signal to the motor control unit, to indicate the motor control unit to switch to the torque control mode. The VCU may further send a target torque to the motor control unit, to indicate the motor control unit to control, in the torque control mode based on the target torque, the motor to rotate.

According to a third aspect, this application provides a parking control method. The method is applicable to any apparatus with a control capability. Specifically, the apparatus may be a main control unit in a vehicle, for example, a vehicle control unit (vehicle control unit, VCU), a vehicle dynamics control (vehicle dynamics control, VDC) system, or an intelligent driving computing center (mobile data center, MDC); or may be an apparatus that can support a main control unit in implementing the function, for example, a chip, a chip system, a circuit, or a circuit system. The method includes: The main control unit determines target wheel rotation information of a vehicle during parking of the vehicle, and sends the target wheel rotation information to a motor control unit.

In a possible design, the target wheel rotation information may include a target rotational speed of a wheel and/or a target rotation angle of the wheel.

In a possible design, if automatic parking assist is configured for the vehicle, the main control unit may determine, in the following manner, that the vehicle is to park: The main control unit receives an automatic parking assist request, and determines that the vehicle is to park.

In a further design, automatic parking assist is configured for the vehicle, and that the main control unit determines the target wheel rotation information of the vehicle during parking of the vehicle includes: First, during parking of the vehicle, the main control unit inputs a current location of the vehicle and a location of a target parking space to a preset trajectory planning algorithm, and obtains a parking trajectory output by the trajectory planning algorithm, where the parking trajectory includes a vehicle speed needed at each step for the vehicle to park into the target parking space from the current location. Then the main control unit determines a next-step target vehicle speed based on the parking trajectory, and determines, based on a preset mapping relationship between a vehicle speed and wheel rotation information, target wheel rotation information corresponding to the target vehicle speed.

In a possible design, if manual parking is configured for the vehicle, when a status of the vehicle meets at least one of the following conditions, the main control unit may determine that the vehicle is to park: A vehicle speed is lower than a preset vehicle speed, a rotational speed of a motor is lower than a preset rotational speed, a torque requested by a driver is less than a torque threshold, a change rate of the torque requested by the driver is less than a first change rate threshold, an opening degree of an accelerator pedal is less than a first opening degree threshold, a change rate of the opening degree of the accelerator pedal is less than a second change rate threshold, an opening degree of a brake pedal is greater than a second opening degree threshold, and a change rate of the opening degree of the brake pedal is less than a third change rate threshold.

In a further design, manual parking is configured for the vehicle, and that the main control unit determines the target wheel rotation information of the vehicle during parking of the vehicle includes: During parking of the vehicle, the main control unit first determines, by querying a preset mapping relationship between an opening degree of a pedal and a torque, a target torque corresponding to a current opening degree of a pedal of the vehicle, and then determines, by querying a preset mapping relationship between a torque and wheel rotation information, target wheel rotation information corresponding to the target torque. The preset mapping relationship between an opening degree of a pedal and a torque may be specifically a preset mapping relationship between the opening degree of the accelerator pedal and a torque.

In a further design, after determining the target torque corresponding to the current opening degree of the pedal of the vehicle, and before determining, by querying the preset mapping relationship between a torque and wheel rotation information, the target wheel rotation information corresponding to the target torque, if determining that a travel mode of the vehicle is configured to be a first mode, where a crawl torque corresponding to the first mode is greater than the target torque, the main control unit may use the crawl torque as the target torque.

In a further design, the preset mapping relationship between a torque and wheel rotation information includes a mapping relationship between a torque and wheel rotation information that corresponds to the first mode and a mapping relationship between a torque and wheel rotation information that corresponds to a second mode. In a mapping relationship between a torque and wheel rotation information that corresponds to either travel mode, one torque range corresponds to one piece of rotation information. A width of a torque range in the mapping relationship between a torque and wheel rotation information that corresponds to the second mode is less than a width of a torque range in the mapping relationship between a torque and wheel rotation information that corresponds to the first mode. In this case, that the main control unit determines, by querying the preset mapping relationship between a torque and wheel rotation information, the target wheel rotation information corresponding to the target torque includes: The main control unit determines, by querying a mapping relationship between a torque and wheel rotation information that corresponds to the travel mode of the vehicle, the target wheel rotation information corresponding to the target torque.

In a further design, after determining the target wheel rotation information corresponding to the target torque, and before sending the target wheel rotation information to the motor control unit, the main control unit may further correct the target wheel rotation information by using current vehicle speed information of the vehicle, where corrected target wheel rotation information is between wheel rotation information corresponding to the current vehicle speed information of the vehicle and the target wheel rotation information existing before the correction.

In a possible design, the parking control method may further include: After the vehicle ends parking, the main control determines target torque information corresponding to the target wheel rotation information, and sends the target torque information to the motor control unit; and then receives rotation information of the wheel from a wheel sensor, corrects the target torque information based on the rotation information of the wheel and the target wheel rotation information, and sends corrected target torque information to the motor control unit.

In a further design, if automatic parking assist is configured for the vehicle, when determining that a status of the vehicle meets at least one of the following conditions, the main control unit may determine that the vehicle ends parking: An opening degree of an accelerator pedal is greater than 0; an opening degree of a brake pedal is greater than a preset opening degree threshold, and the preset opening degree threshold is greater than 0; a steering wheel is turned; a parking position is used; and a parking end request is received.

In a further design, if manual parking is configured for the vehicle, when determining that the status of the vehicle meets at least one of the following conditions, the main control unit may determine that the vehicle ends parking: The vehicle speed is not lower than the preset vehicle speed, the rotational speed of the motor is not lower than the preset rotational speed, the torque requested by the driver is not less than the torque threshold, the change rate of the torque requested by the driver is not less than the first change rate threshold, the opening degree of the accelerator pedal is not less than the first opening degree threshold, the change rate of the opening degree of the accelerator pedal is not less than the second change rate threshold, the opening degree of the brake pedal is not greater than the second opening degree threshold, and the change rate of the opening degree of the brake pedal is not less than the third change rate threshold.

According to a fourth aspect, this application provides a parking control method. The method is applicable to any apparatus with a control capability. Specifically, the apparatus may be a motor control unit in a vehicle; or may be an apparatus that can support a motor control unit in implementing the function, for example, a chip, a chip system, a circuit, or a circuit system. The method includes: During parking of the vehicle, the motor control unit first receives target wheel rotation information from a main control unit, sends a first drive electrical signal to a motor based on the target wheel rotation information, and receives motor rotation information from a motor sensor; and then sends a second drive electrical signal to the motor based on the motor rotation information and the target wheel rotation information. The drive electrical signal (including the first drive electrical signal and the second drive electrical signal) is used to drive the motor to rotate, and the rotation of the motor is used to drive a wheel to rotate.

In a possible design, the target wheel rotation information may include a target rotational speed of the wheel and/or a target rotation angle of the wheel, and the motor rotation information may include a rotational speed of the motor and/or a rotation angle of the motor.

In a possible design, that the motor control unit sends the first drive electrical signal to the motor based on the target wheel rotation information includes: The motor control unit first determines, by querying a preset mapping relationship between wheel rotation information and a drive electrical signal, a target drive electrical signal corresponding to the target wheel rotation information; then queries a preset transition gradient table based on the target drive electrical signal and a current drive electrical signal of the motor, and determines transition drive electrical signals needed for converting the current drive electrical signal of the motor into the target drive electrical signal; and then sequentially sends the transition drive electrical signals to the motor.

In a further design, the preset transition gradient table may include a transition gradient table corresponding to a first mode and a transition gradient table corresponding to a second mode. In this case, that the motor control unit queries the preset transition gradient table based on the target drive electrical signal and the current drive electrical signal of the motor, and determines the transition drive electrical signals needed for converting the current drive electrical signal of the motor into the target drive electrical signal includes: The motor control unit queries, based on the target drive electrical signal and the current drive electrical signal of the motor, a transition gradient table corresponding to a travel mode of the vehicle, and determines the transition drive electrical signals.

In a possible design, the parking control method may further include: After the vehicle ends parking, the motor control unit receives target torque information from the main control unit, determines a third drive electrical signal based on the target torque information, and sends the third drive electrical signal to the motor.

According to a fifth aspect, an embodiment of this application provides a parking control apparatus. The parking control apparatus has a function of implementing the main control unit in the second aspect or the third aspect or the motor control unit in the fourth aspect. The function may be implemented by hardware, or may be implemented by hardware executing corresponding software. The hardware or the software includes one or more units or modules corresponding to the foregoing function.

In a possible implementation, the parking control apparatus includes a processor. The processor is configured to support the parking control apparatus in performing a corresponding function of the main control unit in the second aspect or the third aspect. The parking control apparatus may further include a memory. The memory may be coupled to the processor, and the memory stores program instructions and data that are necessary for the parking control apparatus. Optionally, the parking control apparatus further includes a transceiver. The transceiver is configured to support communication between the parking control apparatus and a motor control unit or the like. The transceiver may be an independent receiver, an independent transmitter, a transceiver integrated with a transceiver function, or an interface circuit.

In a possible implementation, the parking control apparatus may be a main control unit, or a component that may be used in a main control unit, for example, a chip, a chip system, a circuit, or a circuit system. The parking control apparatus may implement the method according to any one of the designs in the second aspect or the third aspect.

In another possible implementation, the parking control apparatus includes a processor. The processor is configured to support the parking control apparatus in performing a corresponding function of the motor control unit in the fourth aspect. The parking control apparatus may further include a memory. The memory may be coupled to the processor, and the memory stores program instructions and data that are necessary for the parking control apparatus. Optionally, the parking control apparatus further includes a transceiver. The transceiver is configured to support communication between the parking control apparatus and a main control unit or the like. The transceiver may be an independent receiver, an independent transmitter, a transceiver integrated with a transceiver function, or an interface circuit.

In a possible implementation, the parking control apparatus may be a motor control unit, or a component that may be used in a motor control unit, for example, a chip, a chip system, a circuit, or a circuit system. The parking control apparatus may implement the method according to any one of the designs in the fourth aspect.

According to a sixth aspect, an embodiment of this application provides a parking control apparatus, configured to implement the second aspect or any method in the second aspect, or configured to implement the third aspect or any method in the third aspect, or configured to implement the fourth aspect or any method in the fourth aspect. The apparatus includes corresponding functional units, respectively configured to implement the steps in the foregoing method. The function may be implemented by hardware, or may be implemented by hardware executing corresponding software. The hardware or the software includes one or more units corresponding to the foregoing function.

In a possible implementation, the parking control apparatus may be a main control unit, or a component that may be used in a main control unit, for example, a chip, a chip system, a circuit, or a circuit system. The parking control apparatus may include a determining unit and a transceiver unit. These units may perform corresponding functions in the foregoing method examples. For details, refer to detailed descriptions in the method examples. Details are not described herein again.

In another possible implementation, the parking control apparatus may be a motor control unit, or a component that may be used in a motor control unit, for example, a chip, a chip system, a circuit, or a circuit system. The parking control apparatus may include a processing unit and a transceiver unit. These units may perform corresponding functions in the foregoing method examples. For details, refer to detailed descriptions in the method examples. Details are not described herein again.

According to a seventh aspect, this application provides an electronic device, including the parking control system according to the first aspect.

In a possible design, the electronic device may be a mobile device, for example, a car, a ship, an airplane, an uncrewed aerial vehicle, a train, a van, a truck, a robotic vacuum cleaner, a robotic mopping device, or a mobile smart home appliance.

According to an eighth aspect, this application provides a chip. The chip may include a processor and an interface. The processor is configured to read instructions through the interface, to perform the method according to any one of the designs in the second aspect, the third aspect, or the fourth aspect.

According to a ninth aspect, this application provides a computer-readable storage medium. The computer-readable storage medium stores a computer program. When the computer program is run, the method according to any one of the designs in the second aspect, the third aspect, or the fourth aspect is implemented.

According to a tenth aspect, this application provides a computer program product. When the computer program product runs on a processor, the method according to any one of the designs in the second aspect, the third aspect, or the fourth aspect is implemented.

For details about beneficial effects of the second aspect to the tenth aspect, refer to technical effects that can be achieved by corresponding designs in the first aspect. Details are not described herein again.

BRIEF DESCRIPTION OF DRAWINGS

FIG. 1 is an example diagram of a possible parking scenario according to an embodiment of this application;

FIG. 2 is an example diagram of an architecture of a parking control system in the industry;

FIG. 3 is an example diagram of an architecture of a parking control system according to an embodiment of this application;

FIG. 4 is an example schematic flowchart of a parking control method according to an embodiment of this application;

FIG. 5 is an example schematic flowchart of a parking control method in an automatic parking assist mode according to an embodiment of this application;

FIG. 6 is an example schematic flowchart of a parking control method in a manual parking mode according to an embodiment of this application;

FIG. 7 is an example diagram of a specific process of a parking control method according to an embodiment of this application;

FIG. 8 is an example diagram of a structure of a parking control apparatus according to an embodiment this application; and

FIG. 9 is an example diagram of a structure of another parking control apparatus according to an embodiment this application.

DESCRIPTION OF EMBODIMENTS

A parking control solution provided in embodiments of this application may be applied to an internet of vehicles, for example, vehicle-to-everything (vehicle-to-everything, V2X), a long term evolution technology for vehicle communication (long term evolution-vehicle, LTE-V), or vehicle-to-vehicle (vehicle-to-vehicle, V2V). For example, the solution may be applied to a vehicle with a parking control function, or another apparatus with a parking control function in a vehicle. The another apparatus includes but is not limited to a vehicle-mounted terminal, a vehicle-mounted controller, a vehicle-mounted module, a vehicle-mounted assembly, a vehicle-mounted component, a vehicle-mounted chip, a vehicle-mounted unit, or another sensor like a vehicle-mounted radar or a vehicle-mounted camera. The vehicle may implement the parking control solution provided in embodiments of this application through the vehicle-mounted terminal, the vehicle-mounted controller, the vehicle-mounted module, the vehicle-mounted assembly, the vehicle-mounted component, the vehicle-mounted chip, the vehicle-mounted unit, or the vehicle-mounted radar or camera. Certainly, the parking control solution in embodiments of this application may be further applied to a smart terminal with a parking control function other than the vehicle, or configured on a smart terminal with a parking control function other than the vehicle, or configured on a component of the smart terminal. The smart terminal may be another terminal device like an intelligent transportation device, a smart home device, or a robot. For example, the smart terminal includes but is not limited to a smart terminal, or a controller, a chip, another sensor like a radar or a camera, or another component in a smart terminal. The smart terminal may implement a parking control function for a vehicle by connecting to related components in the vehicle, for example, a motor and various sensors.

The following describes the technical solutions in embodiments of this application with reference to the accompanying drawings in embodiments of this application. It should be understood that embodiments described below are merely some but not all of embodiments of this application.

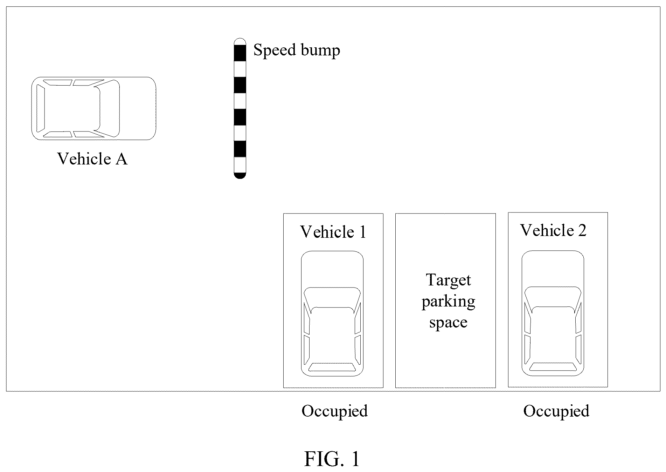

FIG. 1 is a diagram of a possible parking scenario according to an embodiment of this application. In the parking scenario, it is assumed that a to-be-parked vehicle is a vehicle A, there is an obstacle (for example, a speed bump) not far in front of the vehicle A, and there is a target parking space on the right in front of the vehicle A. The target parking space is between a parking space 1 and a parking space 2, a vehicle 1 is in the parking space 1, and a vehicle 2 is in the parking space 2.

In the current parking scenario, if manual parking is configured for the vehicle A, the vehicle A may be parked into the target parking space under a driving operation of a user. For example, if the user determines to park the vehicle into the target parking space, the user may first obtain a corresponding driving force by heavily stepping on an accelerator, and after the vehicle travels across the speed bump, quickly apply a brake, and at the same time, gently step on the accelerator, to enable the vehicle to travel into the target parking space at a low speed.

In the current parking scenario, if automatic parking assist is configured for the vehicle A, the vehicle A may automatically park into the target parking space. For example, in a scenario, the vehicle A may obtain an image of a surrounding environment through automatic scanning, and may display the image to a user through a display, projection, or the like, and ask the user "Are you sure you want to park into the target parking space?" If the user answers "Yes" through voice, a touchscreen, or the like, the vehicle A determines that a parking request is received, and the vehicle A may automatically park into the target parking space. Alternatively, in another scenario, if the target parking space is narrow, the user may alternatively first get out of the vehicle, and may indicate, by triggering an auto valet parking button configured on a device like a mobile phone or a vehicle key, the vehicle A to automatically park into the target parking space.

Herein, it should be noted that the user may indicate, in any manner, the vehicle A to automatically park into the target parking space. For example, the indication may be an in-vehicle voice indication, a display button indication, or an out-vehicle device indication described in the foregoing content, or may be a gesture recognition indication, an electroencephalogram indication, or an out-vehicle button indication. This is not specifically limited in embodiments of this application.

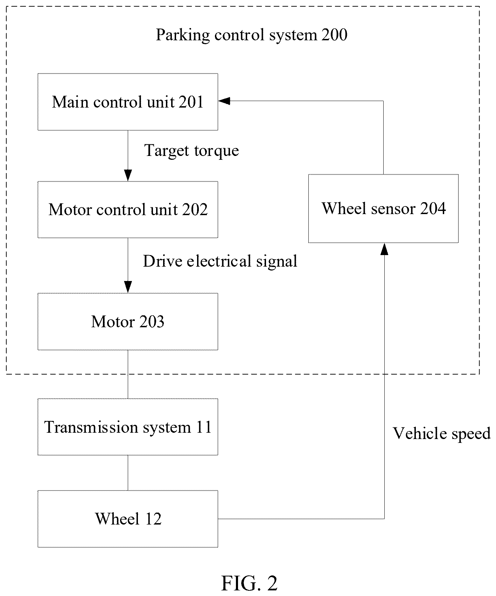

FIG. 2 is a diagram of an architecture of a parking control system in the industry. The parking control system 200 includes a main control unit 201, a motor control unit 202, a motor 203, and a wheel sensor 204. In addition to the parking control system 200, a vehicle may further include other components, such as a transmission system 11, a wheel 12, a steering wheel, and a steering mechanism. The main control unit 201, the motor control unit 202, and the motor 203 are electrically connected in sequence. The motor 203, the transmission system 11, and the wheel 12 are mechanically connected in sequence. The main control unit 201 is further electrically connected to the wheel sensor 204.

Refer to both FIG. 1 and FIG. 2. A parking control process in the industry is as follows:
When the vehicle A is configured to be in a manual parking mode, the main control unit 201 may obtain, in real time, a turning angle at which the user turns the steering wheel and an opening degree of an accelerator pedal that the user steps on; control, based on the turning angle of the steering wheel, the steering mechanism to drive the wheel 12 to rotate at a corresponding angle; determine, based on a preset mapping relationship between the opening degree of the accelerator pedal and a torque, a target torque corresponding to a current opening degree of the accelerator pedal; and then send the target torque to the motor control unit 202. The motor control unit 202 queries a preset mapping relationship between a torque and an electrical signal, determines a drive electrical signal corresponding to the target torque, and sends the drive electrical signal to the motor 203. The motor 203 rotates under the action of the drive electrical signal. In addition, under transmission effect of the transmission system 11, the rotation of the motor 203 also drives the wheel 12 to rotate, and a rotational speed of the wheel 12 is collected by the wheel sensor 204 in real time. The main control unit 201 obtains a real rotational speed of the wheel 12 that is collected by the wheel sensor 204; invokes, based on the real rotational speed of the wheel 12, a preset closed-loop control algorithm to correct the target torque; and resends a corrected target torque to the motor control unit 202, to adjust a drive electrical signal to be output by the motor control unit 202 to the motor 203, and gradually adjust the real rotational speed of the wheel 12 to a target rotational speed matching the current opening degree of the accelerator pedal.

When the vehicle A is configured to be in an automatic parking assist mode, the main control unit 201 may input a current location of the vehicle A and a location of the target parking space to a preset trajectory planning algorithm, and obtain a parking trajectory output by the trajectory planning algorithm, where the parking trajectory includes a vehicle speed and a steering wheel turning angle that are needed at each step for the vehicle A to park into the target parking space from the current location. The main control unit 201 determines a target vehicle speed and a target steering wheel turning angle for a next step based on the parking trajectory, sends the target steering wheel turning angle to the steering mechanism to drive the steering mechanism to drive the wheel 12 to rotate at a corresponding angle, converts the target vehicle speed into a corresponding target torque, and sends the target torque to the motor control unit 202. The motor control unit 202 queries a preset mapping relationship between a torque and an electrical signal, determines a drive electrical signal corresponding to the target torque, and sends the drive electrical signal to the motor 203. The motor 203 rotates under the action of the drive electrical signal, to drive, under transmission effect of the transmission system 11, the wheel 12 to rotate. A rotational speed of the wheel 12 is collected by the wheel sensor 204 in real time. The main control unit 201 obtains a real rotational speed of the wheel 12 that is collected by the wheel sensor 204; invokes, based on the real rotational speed of the wheel 12 and a target rotational speed, a preset closed-loop control algorithm to correct the target torque; and resends a corrected target torque to the motor control unit 202, to adjust a drive electrical signal to be output by the motor control unit 202 to the motor 203.

To sum up, in both the automatic parking assist scenario and the manual parking scenario, in the parking control solution in the industry, a closed-loop control policy is executed on the side of the main control unit 201, and the main control unit 201 corrects, based on the real rotational speed of the wheel, the target torque to be sent to the motor control unit 202. In embodiments of this application, this control mode is referred to as a torque control mode. However, in the torque control mode, to correct a torque based on a rotational speed, at least conversion between two types of data with different units, that is, conversion from the rotational speed to the torque, needs to be performed. In addition, an entire closed-loop control link also needs to pass through six components: the main control unit 201, the motor control unit 202, the motor 203, the transmission system 11, the wheel 12, and the wheel sensor 204. Consequently, a path of the entire closed-loop control link is quite long, a long closed-loop control delay is needed, and parking control efficiency is low. Therefore, when road surface disturbance occurs during parking, for example, in the case of a small step, an uneven road surface, a low-lying obstacle, or a high-profile speed bump, in this parking control solution, closed-loop control cannot be quickly performed due to a long closed-loop control delay. Consequently, the vehicle A may be subject to oversteer, parking hesitation, vehicle pitching, or the like.

For example, it is assumed that the motor control unit 202 currently controls the motor 203 to rotate based on a target torque of 200 N. However, the vehicle A encounters a high-profile speed bump after traveling for 1.5s, and the 200 N cannot enable the vehicle A to cross the speed bump. Consequently, the vehicle A is stuck, and a vehicle speed changes to 0. Then, after information about the getting stuck is fed back to the main control unit 201, because a real vehicle speed collected by the wheel sensor 204 changes to 0, the main control unit 201 sharply increases the target torque, for example, directly increases the target torque from 200 N to 400 N. The target torque of 400 N is indicated to the motor control unit 202, and may be applied to the motor 203 by the motor control unit 202 at 1.9s. It is assumed that the vehicle A crosses the speed bump at 2.0s under the action of the large torque of 400 N. However, the main control unit 201 detects an excessively high vehicle speed from the wheel sensor 204 only at 2.5s. In this case, another round of closed-loop policy adjustment is performed, and a torque of the motor control unit 202 may return to 200 N at 3s.

First, in this example, although the target torque is 200 N, the target torque is adjusted to 400 N when the vehicle A crosses the speed bump, and is adjusted back to 200 N 1s after the vehicle A crosses the speed bump due to a long closed-loop control delay. It can be learned that a long-time unnecessary torque increase occurs during the parking control, leading to oversteering of the vehicle. In addition, in this example, the motor control unit 202 controls, based on the received target torque, the motor 203 to rotate. To be specific, provided that no new target torque is received, the motor control unit 202 keeps the target torque applied to the motor 203 unchanged. Therefore, when the vehicle A encounters the speed bump, even if the target torque of 200 N cannot enable the vehicle A to cross the speed bump, the motor control unit 202 cannot increase the target torque because no new target torque is received. Consequently, the vehicle A is stuck, and parking hesitation occurs. Further, in this example, because the vehicle A is stuck when crossing the speed bump, a rotational speed of the wheel 12 greatly changes. Such a great change in a vehicle speed is very likely to cause vehicle pitching of the vehicle A.

To improve parking control efficiency, some solutions are proposed in a present stage. Examples are as follows: In a possible solution, during automatic parking assist of a vehicle, whether the vehicle is hindered by an obstacle terrain is detected. When the vehicle is hindered by the obstacle terrain, a hydraulic braking system of the vehicle is controlled to set fixed hydraulic pressure for a wheel cylinder of the vehicle. After the fixed hydraulic pressure is set, a torque of the vehicle is adjusted to enable the vehicle to cross the obstacle terrain. In this solution, although a hydraulic braking force can be applied to a driving wheel in advance to enable the driving wheel to cross the obstacle terrain, additional energy consumption occurs, leading to an increase in consumption of the hydraulic braking system.

In another possible solution, during automatic parking assist of a vehicle, a condition of a road surface and an obstacle on the road surface are detected at high precision based on high-precision and high-resolution characteristics of a lidar. When an obstacle in front is detected, whether the vehicle can cross the obstacle is determined. If the vehicle can cross the obstacle, a torque limit value is increased, and then the vehicle crosses the obstacle based on an increased torque limit value. In this solution, although feedforward compensation can be performed by using the lidar to detect the obstacle in advance, the operation of increasing the torque limit value still needs to be implemented by a main control unit and a motor control unit. An overall control link is still long, and parking efficiency is not significantly improved. In addition, in this solution of advance detection, a risk of misjudgment may also occur, leading to low parking control precision. Alternatively, in some scenarios, there may be an obstacle that cannot be detected by the lidar. Consequently, the foregoing problem of low parking efficiency cannot be resolved.

In addition, in both the parking control solution in the industry and the foregoing two solutions, the target torque is adjusted based on a wheel velocity fed back by the wheel sensor 204. In a present stage, usually, only 48 collection points are set on a circumference of the wheel 12. To be specific, precision of the wheel velocity collected by the wheel sensor 204 can reach only 1/48 of the circumference of the wheel. In addition, collection frequency of the wheel sensor 204 is usually set to 1/10 ms. A time interval between two collections corresponding to the collection frequency is long. Neither of the long collection time interval and the low collection precision is conducive to improvement of parking control precision. Lower parking control precision leads to a larger quantity of times of deviating from a parking trajectory during parking, and correspondingly leads to a larger quantity of corrections (also referred to as a number of gear changes) and worse impact on improvement of parking control efficiency.

In view of this, embodiments of this application provide a parking control system, to improve parking control efficiency and precision without causing additional energy consumption or detecting an obstacle in advance by using a sensor, and therefore improve parking experience of a user.

In view of the foregoing technical problems, the following describes the technical solutions provided in embodiments of this application with reference to the accompanying drawings.

In the following descriptions, "at least one" means one or more, and "a plurality of" means two or more. In view of this, in embodiments of the present invention, "a plurality of" may also be understood as "at least two". "And/or" describes an association relationship between associated objects, and indicates that three relationships may exist. For example, A and/or B may indicate the following cases: Only A exists, both A and B exist, and only B exists, where A and B may be in a singular form or a plural form. The character "/" usually indicates an "or" relationship between the associated objects. "At least one of the following items (pieces)" or a similar expression thereof indicates any combination of the items, including one of the items (pieces) or any combination of a plurality of the items (pieces). For example, at least one of a, b, or c may indicate a, b, c, a and b, a and c, b and c, or a, b, and c, where a, b, or c may be in a singular form or a plural form.

In addition, unless otherwise specified, ordinal numbers such as "first" and "second" in embodiments of this application are intended to distinguish between a plurality of objects, but not to limit priorities or importance of the plurality of objects. For example, a first drive electrical signal is a drive electrical signal determined based on target wheel rotation information, and a second drive electrical signal is a drive electrical signal obtained through correction based on actual wheel rotation information and the target wheel rotation information. This does not mean that the two drive electrical signals have different priorities or importance.

In addition, an "electrical connection" in the following embodiments of this application may be a connection between electrical components, and a connection between two electrical components may be a direct or indirect connection between the two electrical components. For example, that A is connected to B may be that A is directly connected to B, or may be that A is indirectly connected to B through one or more other electrical components. For example, that A is connected to B may alternatively mean that A is directly connected to C, C is directly connected to B, and A is connected to B through C. In some scenarios, the "connection" may also be understood as coupling, for example, electromagnetic coupling between two inductors. To sum up, the connection between A and B enables transmission of electric energy between A and B.

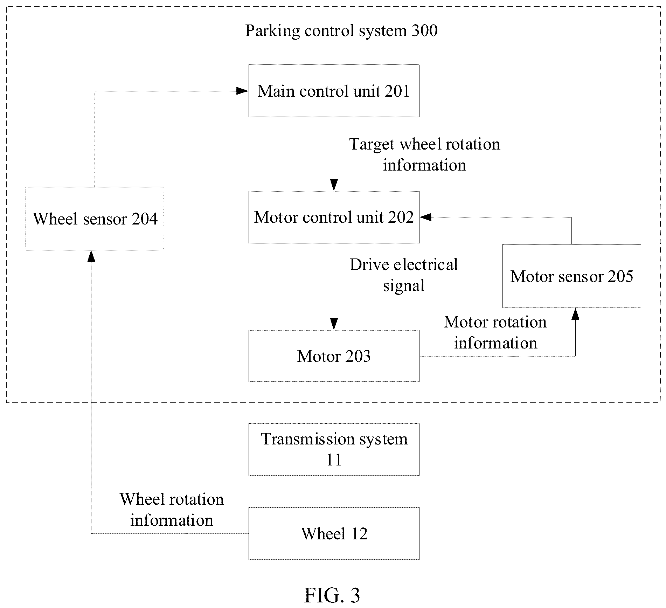

FIG. 3 is an example diagram of an architecture of a parking control system according to an embodiment of this application. The parking control system 300 includes a main control unit 201, a motor control unit 202, a motor 203, and a motor sensor 205. In some scenarios, the parking control system 300 may further include a wheel sensor 204. In addition to the parking control system 300, a vehicle may further include other components, such as a transmission system 11, a wheel 12, a steering wheel, and a steering mechanism (not shown in FIG. 3). The main control unit 201, the motor control unit 202, and the motor 203 are electrically connected in sequence. The motor 203, the transmission system 11, and the wheel 12 are mechanically connected in sequence. The main control unit 201 is further electrically connected to the motor sensor 205 and the wheel sensor 204.

In this embodiment of this application, the main control unit 201 or the motor control unit 202 may have a plurality of specific product implementation forms. For example, the main control unit 201 or the motor control unit 202 may be a controller, or may be some of circuits in a controller, or may be an integration including a plurality of controllers or including circuits in a plurality of controllers. In some scenarios, when the parking control system 200 is located in the vehicle, the main control unit 201 may be specifically a vehicle control unit (vehicle control unit, VCU), a vehicle dynamics control (vehicle dynamics control, VDC) system, or an intelligent driving computing center (mobile data center, MDC), or an integration of at least two of a VCU, a VDC, or an MDC, or some or all of circuits, a circuit system, a chip, or a chip system disposed in a VCU, a VDC, or an MDC. The motor control unit 202 may be specifically a motor control unit (motor control unit, MCU), or a circuit, a circuit system, a chip, or a chip system disposed in an MCU.

In some scenarios, the motor sensor 205 is a resolver sensor, and includes a stator and a rotor. The rotor is usually mounted on an axle of the motor 203, and rotates synchronously with the motor 203. Location information is sensed in a stator coil, and is transmitted through the stator coil. In short, the resolver sensor may be configured to detect a location, a rotational speed, and a direction of the rotor in the motor 203. However, this is merely an example. The motor sensor 205 may alternatively be any sensor that can detect rotation information (for example, a rotation angle and/or a rotational speed) of the motor 203, for example, a photoelectric encoder or a Hall position sensor.

In some scenarios, the wheel sensor 204 is a wheel velocity sensor, and is usually disposed on a wheel hub of the wheel 12 to collect a rotational speed of the wheel 12.

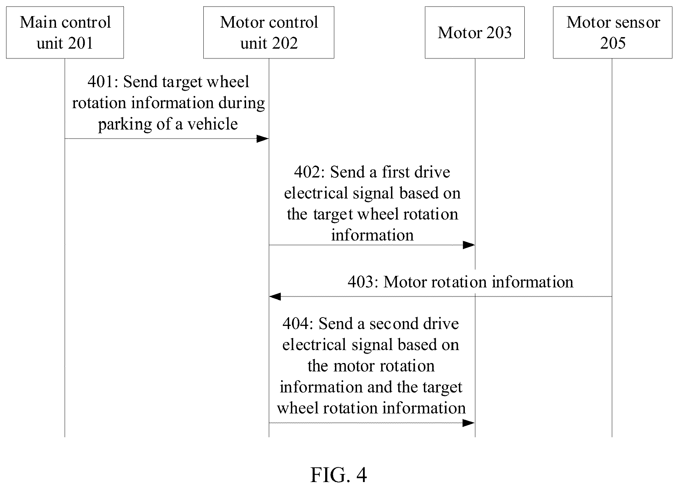

Based on the parking control system, FIG. 4 is a schematic flowchart of a parking control method according to an embodiment of this application. It should be noted that the parking control method may be periodically performed. Operations performed in one periodicity are used below as an example for description. Refer to both FIG. 3 and FIG. 4. The parking control process mainly includes the following steps.

Step 401: The main control unit 201 sends target wheel rotation information to the motor control unit 202 during parking of the vehicle.

Herein, "during parking of the vehicle" may be understood as being at any moment in a time period from a moment at which the vehicle starts parking to a moment at which the vehicle ends parking. This may be further understood as follows: When detecting that the vehicle has an intention of parking, the main control unit 201 may send the target wheel rotation information to the motor control unit 202 in a subsequent control process, and then continue to send the target wheel rotation information. When detecting that the vehicle has an intention of ending parking, the main control unit 201 no longer sends the target wheel rotation information in a subsequent control process, but sends a target torque to the motor control unit 202.

For example, the target wheel rotation information may include a target rotational speed of the wheel 12 and/or a target rotation angle of the wheel 12.

Rotation angles are in a one-to-one correspondence with rotational speeds. The rotational speed is a quantity of rotations within unit time, and the rotation angle is an angle of rotation within unit time. For example, it is assumed that a rotational speed is N, a rotation angle is $\Omega$, a unit of the rotational speed N is rotations per millisecond (r/ms), and a unit of the rotation angle $\Omega$ is degrees per millisecond (°/ms). In this case, a relationship between the rotational speed N and the rotation angle $\Omega$ satisfies the following formula (1):

$$\Omega = 360 \times N \quad (1)$$

It can be learned from the formula (1) that precision of the rotational speed can reach 1 r/ms, and precision of the rotation angle can reach 1°/ms. Clearly, the precision of the rotation angle is much higher than the precision of the rotational speed. Therefore, in some scenarios, if a high requirement is imposed on parking control precision, the main control unit 201 may be configured to send the target rotation angle of the wheel 12 to the motor control unit 202, and parking control is performed based on the rotation angle with higher precision, to meet the high requirement for precision. Alternatively, in some other scenarios, safety monitoring usually needs to be performed during parking control based on the rotation angle. This may cause additional power consumption and complexity. Therefore, if a requirement for parking control precision is not high, the main control unit 201 may be configured to send the target rotational speed of the wheel 12 to the motor control unit 202, to reduce power consumption and system complexity while meeting the precision requirement.

Step 402: The motor control unit 202 sends a first drive electrical signal to the motor 203 based on the target wheel rotation information.

The first drive electrical signal may include a drive current and/or a drive voltage. The first drive electrical signal is used to drive the motor 203 to rotate. In addition, under transmission effect of the transmission system 11, the rotation of the motor 203 also drives the wheel 12 to rotate.

For example, after receiving the target wheel rotation information sent by the main control unit 201, the motor control unit 202 may first determine a corresponding target drive electrical signal based on the target wheel rotation information, and then send the target drive electrical signal (used as the first drive electrical signal) to the motor 203 through a controller area network (controller area network, CAN) bus. The motor control unit 202 may determine the target drive electrical signal based on the target wheel rotation information in many manners. For example, the motor control unit 202 may query a preset mapping relationship between wheel rotation information and a drive electrical signal, to directly obtain the target drive electrical signal corresponding to the target wheel rotation information. Alternatively, the motor control unit 202 may input the target wheel rotation information to a preset conversion model, to directly obtain the target drive electrical signal output by the conversion model. Alternatively, the motor control unit 202 may first query a preset mapping relationship between wheel rotation information and a torque to obtain a target torque corresponding to the target wheel rotation information, and then query a preset mapping relationship between a torque and a drive electrical signal to obtain the target drive electrical signal corresponding to the target torque. There are many possible implementations. Examples are not exhaustively listed herein.

In an example, if a drive electrical signal suddenly rises or drops, a rotational speed of the motor 203 also suddenly increases or decreases, causing a sudden increase or decrease in a vehicle speed. This is very likely to cause vehicle pitching or driving instability. Therefore, after determining the target drive electrical signal corresponding to the target wheel rotation information, the motor control unit 202 may further determine a transition drive electrical signal based on a current drive electrical signal of the motor 203 and the target drive electrical signal, and then send the transition drive electrical signal (used as the first drive electrical signal) to the motor 203. The transition drive electrical signal may be one or more values between the current drive electrical signal and the target drive electrical signal. For example, the transition drive electrical signal may be an average value of the current drive electrical signal and the target drive electrical signal, or may include a plurality of transition values during gradual switching from the current drive electrical signal to the target drive electrical signal, or may directly be the target drive electrical signal when a difference between the target drive electrical signal and the current drive electrical signal is not large. In this way, the transition drive electrical signal is used to drive the motor to rotate, to avoid a sudden increase or decrease in the rotational speed of the motor. This helps improve travel stability of the vehicle.

For ease of understanding, an example in which the target wheel rotation information is the target rotational speed of the wheel and a drive electrical signal is a drive current is used.

In a specific example, the motor control unit 202 may first determine, by querying a preset mapping relationship between a rotational speed of the wheel and a drive current, a target drive current corresponding to the target rotational speed of the wheel; then query a preset transition gradient table based on the target drive current and a current drive current of the motor 203, and determine transition drive currents needed for converting the current drive current into the target drive current; and then sequentially send the transition drive currents to the motor 203, to drive the motor 203 to gradually switch from a current motor rotational speed to a motor rotational speed corresponding to the target rotational speed of the wheel.

The preset mapping relationship between a rotational speed and a drive current may be obtained through experimental testing, or may be set based on experience, and may be presented in any one of the following forms: a data table, a data graph, a queue, a stack, or the like. This is not specifically limited.

In some scenarios, two control modes may be configured in the motor control unit 202: a rotational speed/rotation angle control mode and a torque control mode. A preset mapping relationship between a rotational speed and a drive current is configured in the rotational speed/rotation angle control mode, and a preset mapping relationship between a torque and a drive current is configured in the torque control mode. A control speed in the rotational speed/rotation angle control mode is much higher than a control speed in the torque control mode. A user can almost immediately obtain feedback from the vehicle after stepping on an accelerator pedal. Driving experience of the user is poor. Therefore, the rotational speed/rotation angle control mode is usually used only to assist the user in quickly adjusting a status of the vehicle when the vehicle is in an unstable state. However, in this embodiment of this application, the two control modes in the motor control unit 202 may be directly used. When it is determined that the vehicle has an intention of parking, the rotational speed/rotation angle control mode of the motor control unit 202 is activated, and the main control unit 201 directly sends the target rotational speed or the target rotation angle of the wheel to the motor control unit 202. In this way, the motor control unit 202 can convert the target rotational speed into a target drive current by querying the preset mapping relationship between a rotational speed and a drive current that is configured in the rotational speed/rotation angle control mode, to complete rotational speed-based closed-loop control. In this way, even if road surface disturbance occurs during parking, the vehicle can still smoothly park into a target parking space based on quick closed-loop control. On the contrary, when it is determined that the vehicle has an intention of ending parking, the torque control mode of the motor control unit 202 is activated, and the main control unit 201 sends, to the motor control unit 202, a target torque corresponding to the target rotational speed. In this way, the motor control unit 202 can convert the target torque into a target drive current by querying the preset mapping relationship between a torque and a drive current and that is configured in the torque control mode, to complete torque-based closed-loop control. This reserves specific response time for the user after the user steps on the accelerator pedal, to improve driving experience of the user.

In addition, the torque control mode is a default control mode in the motor control unit 202. Therefore, each time the vehicle is started or restarted, the torque control mode in the motor control unit 202 is activated by default. An activation manner may be activation through triggering by the main control unit 201, or may be automatic activation. This is not specifically limited.

The preset transition gradient table may be preconfigured on the vehicle according to a user requirement, and can be upgraded with a software or hardware upgrade of the vehicle. For example, a latest version may be automatically downloaded when the vehicle is upgraded by using an over-the-air technology (over-the-air technology, OTA). In some examples, the user requirement is a travel mode of the vehicle that is expected by the user. Usually, the travel mode of the vehicle may include a first mode and a second mode. The first mode focuses more on user experience, and is also referred to as a comfort mode, an economic mode, a normal mode, a custom mode, or the like in some scenarios. The second mode focuses more on a response speed, and is also referred to as a sport mode, a dynamic mode, a radical mode, or the like in some scenarios. When the travel mode of the vehicle is configured to be the first mode, only a transition gradient table corresponding to the first mode may be configured on the vehicle. When the travel mode of the vehicle is configured to be the second mode, only a transition gradient table corresponding to the second mode may be configured on the vehicle. Alternatively, in some scenarios, both a transition gradient table corresponding to the first mode and a transition gradient table corresponding to the second mode are configured on the vehicle. Each time the vehicle is started or when mode switching needs to be performed, the user may indicate, through a display, voice, a gesture, a button, or the like, the vehicle to switch to a target travel mode. In this way, during parking of the vehicle, the motor control unit can determine transition drive currents based on a target drive current and a current drive current by querying a transition gradient table corresponding to the target travel mode of the vehicle.

For example, Table 1 shows a segment of a transition gradient table corresponding to the first mode according to an embodiment of this application.

Table 1

| Current drive current | Target drive current | Gradient current |
|---|---|---|
| 400A | 300A | Gradient decreasing at a speed of -10A/100 µs |
| | 350A | Gradient decreasing at a speed of -5A/100 µs |
| | 450A | Gradient increasing at a speed of 5A/100 µs |
| | 500A | Gradient increasing at a speed of 10A/100 µs |
| 450A | 200A | Gradient decreasing at a speed of -25A/100 µs |
| | 300A | Gradient decreasing at a speed of -15A/100 µs |
| | 450A | Gradient increasing at a speed of 15A/100 µs |
| | 500A | Gradient increasing at a speed of 25A/100 µs |

For example, Table 2 shows a segment of a transition gradient table corresponding to the second mode according to an embodiment of this application.

Table 2

| Current drive current | Target drive current | Gradient current |
|---|---|---|
| 400A | 300A | Gradient decreasing at a speed of -20A/100 µs |
| | 350A | Gradient decreasing at a speed of -10A/100 µs |
| | 450A | Gradient increasing at a speed of 10A/100 µs |
| | 500A | Gradient increasing at a speed of 20A/100 µs |
| 450A | 200A | Gradient decreasing at a speed of -50A/100 µs |
| | 300A | Gradient decreasing at a speed of -30A/100 µs |
| | 450A | Gradient increasing at a speed of 30A/100 µs |
| | 500A | Gradient increasing at a speed of 50A/100 µs |

It can be learned from both Table 1 and Table 2 that, for a same current drive current and a same target drive current, a gradient increasing or gradient decreasing speed in the transition gradient table corresponding to the second mode is higher than a gradient increasing or gradient decreasing speed in the transition gradient table corresponding to the first mode. In this way, the vehicle is more quickly adjusted to the target drive current in the second mode, to meet a requirement for a response speed in the second mode, or is smoothly adjusted to the target drive current in the first mode, to meet a requirement for user experience in the first mode.

It should be noted that the mapping relationships and the transition gradient tables in the foregoing content may be stored in a vehicle-mounted memory; or may be locally stored in the motor control unit 202; or may be stored in another component of the vehicle, another vehicle, or a cloud server, and are obtained by the motor control unit 202 from the another component, the another vehicle, or the cloud server during use. This is not specifically limited in this embodiment of this application.

Step 403: The motor control unit 202 obtains motor rotation information of the motor that is collected by the motor sensor 205.

The motor rotation information may include a rotational speed of the motor 203 and/or a rotation angle of the motor 203.

In some scenarios, to reduce calculation time, the motor rotation information and the target wheel rotation information may correspond to each other. For example, if the target wheel rotation information is configured to be the target rotational speed of the wheel 12, the motor rotation information may be correspondingly configured to be the rotational speed of the motor 203; or if the target wheel rotation information is configured to be the target rotation angle of the wheel 12, the motor rotation information may be correspondingly configured to be the rotation angle of the motor 203.

Alternatively, in some scenarios, if the motor sensor 205 can collect only the rotational speed of the motor 203 and the target wheel rotation information is configured to be the target rotation angle of the wheel 12, after obtaining the rotational speed of the motor 203, the motor control unit 202 may further convert the rotational speed of the motor 203 into the rotation angle of the motor 203 according to the foregoing formula (1), and then perform the following step 404.

Alternatively, if the motor sensor 205 can collect only the rotation angle of the motor 203 and the target wheel rotation information is configured to be the target rotational speed of the wheel 12, after obtaining the rotation angle of the motor 203, the motor control unit 202 may further convert the rotation angle of the motor 203 into the rotational speed of the motor 203 according to the foregoing formula (1), and then perform the following step 404.

Step 404: The motor control unit 202 sends a second drive electrical signal to the motor 203 based on the motor rotation information and the target wheel rotation information.

For example, after parking starts, the motor control unit 202 receives the 1st piece of target wheel rotation information, and sends a corresponding first drive electrical signal to the motor 203. Then the motor control unit 202 may obtain, based on a preset periodicity, the motor rotation information collected by the motor sensor 205. Duration of the preset periodicity may be the same as duration of a collection periodicity of the motor sensor 205, and is shorter than duration of a periodicity of an entire parking control process. For example, in an example scenario, the entire parking control process is performed based on a large closed-loop periodicity, for example, 10 ms, and the collection periodicity of the motor sensor 205 is performed based on a small closed-loop periodicity, for example, 2 ms. In this scenario, the main control unit 201 determines target wheel rotation information once every 10 ms, and in each 10-ms large closed-loop periodicity, the motor control unit 202 obtains, once every 2 ms, motor rotation information collected by the motor sensor 205 within the 2 ms. In addition, in each 2-ms small closed-loop periodicity, the motor control unit 202 may correct, by using motor rotation information obtained within the 2 ms and target wheel rotation information obtained within a current 10-ms large closed-loop periodicity, a drive electrical signal to be sent to the motor 203, to complete closed-loop control corresponding to the 2-ms small closed-loop periodicity. After repeating closed-loop control in five 2-ms small closed-loop periodicities in this manner, the motor control unit 202 receives target wheel rotation information, in a next 10-ms large closed-loop periodicity, that is sent by the main control unit 201, and then may repeatedly perform the foregoing control process based on the target wheel rotation information in the next 10-ms large closed-loop periodicity, until the vehicle parks into a target parking space. Then the parking ends.

In a further example, the motor control unit 202 may correct the drive electrical signal by using the motor rotation information and the target wheel rotation information in many manners. For example, the motor control unit 202 may first convert the motor rotation information into current wheel rotation information based on a conversion relationship between a motor circumference and a wheel circumference; and then input the current wheel rotation information and the target wheel rotation information to a preset closed-loop control algorithm, and obtain next-step wheel rotation information output by the closed-loop control algorithm. Then the motor control unit 202 may query a preset mapping relationship between wheel rotation information and a drive electrical signal to obtain a next-step drive electrical signal corresponding to the next-step wheel rotation information; and then query a preset transition gradient table to obtain transition drive electrical signals for converting a current drive electrical signal of the motor 203 into the next-step drive electrical signal, and sequentially send the transition drive electrical signals to the motor 203. The preset closed-loop control algorithm may be a proportional integral (proportional integral, PI) algorithm, a proportional integral derivative (proportional integral derivative, PID) algorithm, or the like. This is not specifically limited. For related content of the preset mapping relationship between wheel rotation information and a drive electrical signal and the preset transition gradient table, directly refer to step 402. Details are not described herein again.

To sum up, in the foregoing parking control solution, a closed-loop control policy during parking is executed on the motor control unit side. After the main control unit sends the target wheel rotation information to the motor control unit, the motor control unit implements closed-loop feedback on the target wheel rotation information by using the motor rotation information collected by the motor sensor. This control mode is referred to as the rotational speed/rotation angle control mode. In this way, a rotational speed of the motor is corrected by using the motor rotation information, and conversion between data with different units may not need to be performed during the process. This helps shorten a closed-loop control delay. In addition, an entire closed-loop control link needs to pass through only three components: the motor control unit 202, the motor 203, and the motor sensor 205. A path of the closed-loop control link is short, and a shorter closed-loop control delay is needed. It can be learned that, in comparison with a solution in the conventional technology in which a rotational speed is corrected by using a torque and a closed-loop control policy during parking is executed on a main control unit side, in the parking control solution provided in this embodiment of this application, a closed-loop control delay is effectively shortened, and parking control efficiency is higher. Therefore, even if road surface disturbance occurs during parking, convergence and closed-loop control can be quickly performed due to a short closed-loop control delay. This effectively avoids oversteering, parking hesitation, vehicle pitching, or the like.

For example, as shown in FIG. 1, it is assumed that target wheel rotational speed information sent by the main control unit 201 to the motor control unit 202 during parking of a vehicle A is 500 r/ms. In this case, the motor control unit 202 configures, according to a principle of ensuring that a rotational speed of a wheel stably remains at 500 r/ms, a drive electrical signal to be sent to the motor 203. For example, a drive current initially configured for the motor 203 is 200A. The vehicle A encounters a high-profile speed bump after traveling for 1.5s, and the 200A cannot enable the vehicle A to cross the speed bump. Consequently, a rotational speed of the motor 203 rapidly drops, and the motor 203 stalls, leading to a sudden increase in an actual current of the motor 203. In this case, the motor sensor 202 may determine, based on the state in which the rotational speed of the motor 203 suddenly decreases and the current suddenly increases, that the vehicle A is currently subject to road surface disturbance. Therefore, according to the principle of ensuring that the rotational speed of the wheel stably remains at 500 r/ms, the motor sensor 202 reconfigures a drive current to be sent to the motor 203. Assuming that the drive current is adjusted to 300A, the motor 203 is driven by the drive current of 300A to successfully pass through the road surface disturbance. In this case, the rotational speed of the motor 203 is higher than a rotational speed that enables the rotational speed of the wheel to stably remain at 500 r/ms. The motor sensor 205 quickly transmits the rotational speed to the motor control unit 202, and then the motor control unit 202 may quickly adjust the drive current of the motor 203 back to 200A.

It can be learned that, in the foregoing parking control process, the motor control unit 202 always configures the rotational speed of the motor 203 according to the principle of keeping a vehicle speed at 500 r/ms. Therefore, even if road surface disturbance occurs, under the control of the motor control unit 202, it can still be ensured that the motor 203 always drives the wheel to rotate at the rotational speed of 500 r/ms. In this way, the vehicle can be prevented from being stuck due to the road surface disturbance, and the rotational speed of the vehicle does not suddenly increase to be higher than 500 r/ms. This effectively avoids parking hesitation, getting stuck, vehicle pitching, or the like of the vehicle, and reduces oversteering that occurs after the vehicle crosses an obstacle.

In addition, in the foregoing parking control solution, the target wheel rotation information is corrected by using the motor rotation information collected by the motor sensor, and 4096 location points are usually set on a circumference of the motor. To be specific, precision of a motor rotational speed collected by the motor sensor can reach 1/4096 of the circumference of the motor, and collection frequency of the motor sensor is usually set to 1/2 ms. It can be learned that, compared with the wheel sensor, the motor sensor has higher collection precision and a shorter collection interval. Both the higher collection precision and the shorter collection interval help improve closed-loop control precision, so that parking control precision can be improved. Higher parking control precision indicates a smaller quantity of times of deviating from a parking trajectory during parking, and correspondingly indicates a smaller number of gear changes and better helps improve parking control efficiency.

It should be noted that, in embodiments of this application, in a non-parking scenario, a vehicle uses a torque control mode by default. To be specific, a closed-loop control policy is executed on a main control unit side, and a rotational speed of a motor is corrected by using a torque. For details, refer to the descriptions of FIG. 2. In a parking scenario, a vehicle switches to a rotational speed/rotation angle control mode. To be specific, a closed-loop control policy is executed on a motor control unit side, and a rotational speed of a motor is corrected by using motor rotation information. For details, refer to the descriptions of FIG. 3 and FIG. 4. Whether the vehicle is in the parking scenario or the non-parking scenario may be determined by the main control unit based on at least one of a current status of the vehicle, indication information of a user, or the like. Different parking modes may correspond to different determining manners.

Specific implementations of a parking control process corresponding to an automatic parking assist mode and a parking control process corresponding to a manual parking mode are described below with reference to an implementation solution 1 and an implementation solution 2 respectively.

**Implementation solution 1**

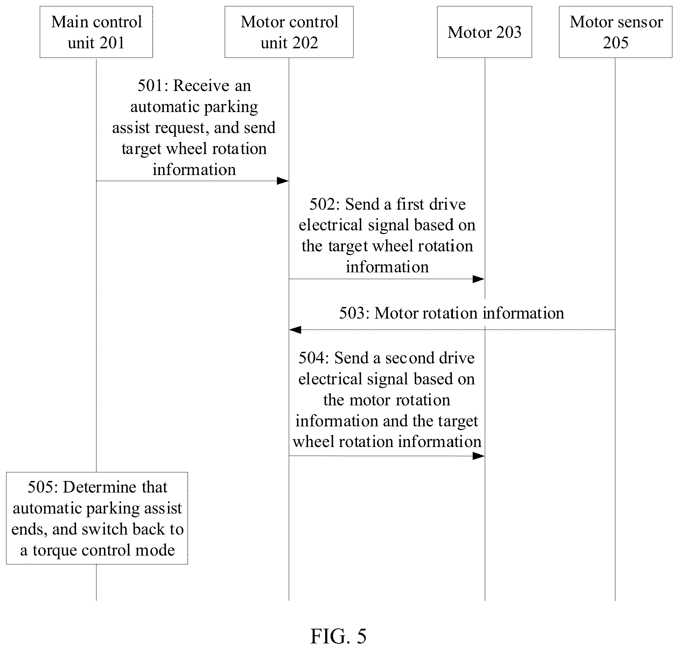

FIG. 5 is a schematic flowchart of a parking control method in an automatic parking assist mode according to an embodiment of this application.

It should be noted that, in the automatic parking assist mode, a main control unit 201 may include, for example, at least one of an MDC, a VCU, and a VDC system. For example, in some scenarios, by default, the VCU is configured to perform a vehicle control operation. In other words, the VCU serves as the main control unit 201. However, after receiving an automatic parking assist request from a user, the VCU sends first indication information to the MDC, to indicate the MDC to take over the vehicle control operation. In this case, the MDC serves as the main control unit 201. Then, when detecting that automatic parking assist ends, the MDC sends second indication information to the VCU, to indicate the VCU to take over the vehicle control operation again. In this case, the VCU serves as the main control unit 201 again. Based on this, in the following descriptions, it can be considered that a main control unit 201 used during automatic parking assist is the MDC and a main control unit 201 used after the automatic parking assist ends is the VCU. Alternatively, in other scenarios, the main control unit 201 may be the VDC. This is not specifically limited in this embodiment of this application.

Refer to both FIG. 3 and FIG. 5. A parking control process in the automatic parking assist mode mainly includes the following steps.

Step 501: When receiving an automatic parking assist request, the main control unit 201 sends target wheel rotation information to the motor control unit 202.

The automatic parking assist request may be triggered by a user through some behaviors. The behaviors include but are not limited to: The user selects a target parking space or taps an automatic parking assist button on a vehicle-mounted display, the user sends voice content like "Confirm parking", the user makes a preset parking gesture to a vehicle-mounted camera, the user triggers a parking indication on a device like a mobile phone or a notebook computer, the user presses an auto valet parking button on a vehicle key, the user presses a parking button on an inner side or an outer side of a vehicle body, and the like.

For example, after receiving the automatic parking assist request, the main control unit 201 may input a current location of the vehicle and a location of the target parking space to a preset trajectory planning algorithm, and obtain a parking trajectory output by the trajectory planning algorithm, where the parking trajectory includes a vehicle speed and a vehicle turning angle that are needed at each step for the vehicle to park into the target parking space from the current location. The main control unit 201 determines a target vehicle speed and a target vehicle turning angle for a next step based on the parking trajectory, sends the target vehicle turning angle to the steering mechanism to drive the steering mechanism to drive the wheel 12 to rotate at a corresponding angle, and converts the target vehicle speed into a target rotational speed of the wheel 12 according to the following formula (2): Further, if the target wheel rotation information is configured to be the target rotational speed of the wheel 12, the main control unit 201 may directly send the target rotational speed to the motor control unit 202. If the target wheel rotation information is configured to be a target rotation angle of the wheel 12, the main control unit 201 needs to first convert the target rotational speed of the wheel 12 into the target rotation angle of the wheel 12 according to the foregoing formula (1), and then send the target rotational speed to the motor control unit 202.

It is assumed that a vehicle speed is V and is measured in a unit of meters per millisecond (m/ms), a rotational speed is N and is measured in a unit of r/ms, and a radius of the wheel 12 is R and is measured in a unit of m. In this case, a relationship between the vehicle speed and the rotational speed satisfies the following formula (2):

$$V = N \times \frac{2\pi r}{60} \qquad (2)$$

It should be noted that the vehicle turning angle may be either of a turning angle of the steering wheel or a turning angle of the steering mechanism. For example, in a scenario in which the vehicle has a steering wheel, in other words, when the vehicle is a vehicle with a steering wheel, the vehicle turning angle may be specifically a turning angle of the steering wheel. After the turning angle of the steering wheel is sent to the steering mechanism, the steering mechanism may convert the turning angle into a turning angle of the steering mechanism based on a preset proportional conversion relationship, and then control steering of the wheel. In a scenario in which the vehicle has no steering wheel, in other words, when the vehicle is a vehicle without a steering wheel, the vehicle turning angle may be specifically a turning angle of the steering mechanism. After the turning angle of the steering mechanism is sent to the steering mechanism, the steering mechanism may directly control steering of the wheel.

Step 502: The motor control unit 202 sends a first drive electrical signal to the motor 203 based on the target wheel rotation information.

Step 503: The motor control unit 202 obtains motor rotation information of the motor that is collected by the motor sensor 205.

Step 504: The motor control unit 202 sends a second drive electrical signal to the motor 203 based on the motor rotation information and the target wheel rotation information.

It should be noted that, for specific implementations of step 502 to step 504, reference may be directly made to step 402 to step 404. Details are not described herein again.

Step 505: The main control unit 201 determines that automatic parking assist ends, and switches back to a torque control mode.

For example, there are a plurality of possible conditions for triggering ending of the automatic parking assist. For example, after detecting that a location of the vehicle overlaps the location of the target parking space, the main control unit 201 may determine that the vehicle has parked into the target parking space, and in this case, determine that the automatic parking assist ends. Alternatively, ending of the automatic parking assist may be triggered by the user through some behaviors. The behaviors include but are not limited to: The user steps on an accelerator pedal, the user heavily steps on a brake pedal, the user turns the steering wheel, the user shifts the vehicle gear to a parking (parking, P) position, the user taps an exit automatic parking assist button on the vehicle-mounted display, the user sends voice content like "Exit parking", the user makes a preset exit parking gesture to the vehicle-mounted camera, the user triggers a stop parking indication on a device like a mobile phone or a notebook computer, the user presses a stop parking button on the vehicle key, the user presses a stop parking button on the inner side or the outer side of the vehicle body, and the like.

Correspondingly, when determining that a status of the vehicle meets any one of the following conditions, the main control unit 201 may determine that the automatic parking assist ends: An opening degree of the accelerator pedal is greater than 0; an opening degree of the brake pedal is greater than a preset opening degree threshold, and the preset opening degree threshold is greater than 0; the steering wheel is turned; the P position is used; and a parking end request is received.

For example, in some scenarios, during automatic parking assist, the user suddenly needs to leave due to other things, and no longer needs to park the vehicle. In this case, the user may step on the accelerator pedal, and may manually take over the steering wheel. In this case, the main control unit 201 detects that the opening degree of the accelerator pedal is greater than 0 and the steering wheel also has a turning angle. Therefore, the main control unit 201 may determine that the user indicates to end the automatic parking assist. In this case, the main control unit 201 may switch from a rotational speed/rotation angle control mode of a previous parking mode back to the default torque control mode. To be specific, the main control unit 201 sends, to the motor control unit 202, a target torque corresponding to a current opening degree of the accelerator pedal; the motor control unit 202 determines a third drive electrical signal based on the target torque, and then sends the third drive electrical signal to the motor 203; and the main control unit 201 further corrects, by using a rotational speed of the wheel 12 that is collected by the wheel sensor 204, the target torque sent to the motor control unit 202. For specific implementation logic of this part, refer to related descriptions of FIG. 2. Details are not described herein again.

For another example, in some other scenarios, during automatic parking assist, the user wants to switch to another parking space for some reasons. In this case, the user may heavily step on the brake pedal, and may indicate, on the vehicle-mounted display, the vehicle to rescan a current parking lot, select a parking space desired by the user, and then re-indicate to perform automatic parking assist. In this case, the main control unit 201 detects that the opening degree of the brake pedal is greater than the preset opening degree threshold, and determines to end the automatic parking assist. The main control unit 201 may switch from a rotational speed/rotation angle control mode of a previous parking mode back to the default torque control mode. In addition, based on the parking space reselected by the user, the main control unit 201 may input a current location of the vehicle and a location of the reselected parking space to the preset trajectory planning algorithm, and obtain a parking trajectory output by the trajectory planning algorithm. Before the vehicle travels from the current location to a location at which a distance between the vehicle and the reselected parking space reaches a specific distance (this may be considered as a distance at which automatic parking assist starts), the main control unit 201 controls traveling of the vehicle by using the torque control mode. To be specific, the main control unit 201 sends, to the motor control unit 202, a target torque corresponding to a target rotational speed; the motor control unit 202 determines a third drive electrical signal based on the target torque, and sends the third drive electrical signal to the motor 203; and the main control unit 201 further adjusts the target torque based on a wheel rotational speed collected by the wheel sensor 204. After the vehicle travels from the current location to the location at which the distance between the vehicle and the reselected parking space reaches the specific distance, the main control unit 201 controls traveling of the vehicle by using the rotational speed/rotation angle control mode. To be specific, the main control unit 201 directly sends a target rotational speed to the motor control unit 202, and the motor control unit 202 adjusts the target rotational speed based on a motor rotational speed collected by the motor sensor 205.

In the foregoing implementation solution 1, the vehicle uses the rotational speed/rotation angle control mode during automatic parking assist, and switches back to the default torque control mode after the automatic parking assist ends. In this way, a high-precision and high-speed parking control policy can be used during automatic parking assist, to reduce parking hesitation, a possibility of getting stuck, and the like in the automatic parking assist scenario, and reduce a number of gear changes. In addition, in a non-parking scenario, it can be ensured that there is sufficient time between a moment at which the user steps on a pedal and a moment at which the user is aware of a response of the vehicle, to improve driving experience of the user.

**Implementation solution 2**

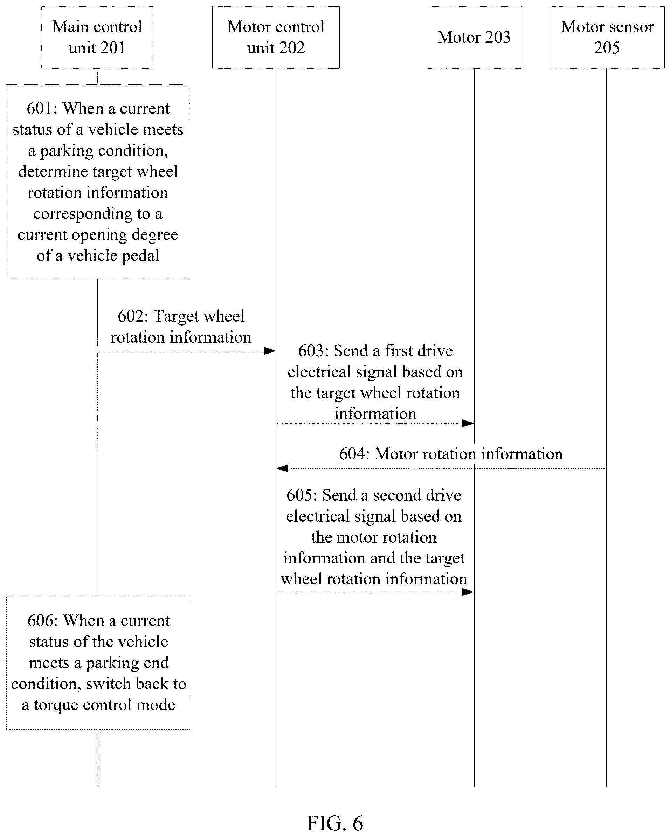

FIG. 6 is a schematic flowchart of a parking control method in a manual parking mode according to an embodiment of this application. In the manual parking mode, a main control unit 201 may be, for example, a VCU or a VDC system. Refer to both FIG. 3 and FIG. 6. A parking control process in the manual parking mode mainly includes the following steps.

Step 601: When a current status of the vehicle meets a parking condition, the main control unit 201 determines target wheel rotation information corresponding to a current opening degree of a vehicle pedal.

For example, the parking condition may include the following conditions: A vehicle speed is lower than a preset vehicle speed, a rotational speed of the motor is lower than a preset rotational speed, a torque requested by a driver is less than a torque threshold, a change rate of the torque requested by the driver is less than a first change rate threshold, an opening degree of an accelerator pedal is less than a first opening degree threshold, a change rate of the opening degree of the accelerator pedal is less than a second change rate threshold, an opening degree of a brake pedal is greater than a second opening degree threshold, and a change rate of the opening degree of the brake pedal is less than a third change rate threshold.

For example, when a travel speed of the vehicle is low, the rotational speed of the motor of the vehicle is low, an accelerator of the vehicle has not been stepped on for a long time or has been gently stepped on for a long time, and a brake of the vehicle has been heavily stepped on for a long time, it can be considered that the vehicle is very likely in a parking mode. In this case, the vehicle may switch to a rotational speed/rotation angle control mode.

For example, in some scenarios, if the vehicle speed is within a range of [-15 kph, 15 kph], it can be considered that the vehicle is in the parking mode. kph is a unit of the vehicle speed, and stands for kilometers per hour.

It should be noted that, in the foregoing example, whether the vehicle is in a parking state is determined based on a combination of a plurality of vehicle statuses such as the vehicle speed, the rotational speed of the motor, the requested torque, the change rate of the requested torque, the opening degree of the accelerator pedal, the change rate of the opening degree of the accelerator pedal, the opening degree of the brake pedal, and the change rate of the opening degree of the brake pedal, so that a determining result can be more fine-grained and accurate. However, this is only an optional implementation. In another optional implementation, whether the vehicle is in a parking state may alternatively be determined by using only some of the foregoing vehicle statuses, or may be determined by using another vehicle status different from the foregoing vehicle statuses. This is not specifically limited in this embodiment of this application.

For example, during manual driving, a preset mapping relationship between an opening degree of a pedal and a torque is configured on the vehicle. The main control unit 201 obtains, in real time, a current opening degree of a vehicle pedal that the user steps on; and may determine, by querying the preset mapping relationship between an opening degree of a pedal and a torque, a target torque corresponding to the current opening degree of the vehicle pedal, where the target torque corresponds to the torque requested by the driver. A case in which the target torque is less than the first change rate threshold and another status of the vehicle also meets the foregoing parking condition indicates that the vehicle currently meets a condition for entering a parking scenario, and the main control unit 201 determines that the driver is performing manual parking.

In some scenarios, in the preset mapping relationship between an opening degree of a pedal and a torque, the opening degree of the pedal may be specifically the opening degree of an accelerator pedal. The main control unit 201 may obtain, in real time, a current opening degree of the accelerator pedal that the user steps on, and query a preset mapping relationship between the opening degree of the accelerator pedal and a torque, to obtain a target torque corresponding to the current opening degree of the accelerator pedal. However, this is only a possible scenario. In another scenario, the opening degree of the pedal may alternatively be an opening degree of another pedal other than the opening degree of the accelerator pedal, for example, the opening degree of the brake pedal; or may be a combination of the opening degree of the accelerator pedal and an opening degree of another pedal, for example, a combination of the opening degree of the accelerator pedal and the opening degree of the brake pedal. When the opening degree of the pedal is a combination of the opening degree of the accelerator pedal and the opening degree of the brake pedal, the preset mapping relationship between an opening degree of a pedal and a torque includes a plurality of groups of opening degrees and a plurality of torques that are in a one-to-one correspondence with the plurality of groups of opening degrees. Each group of opening degrees includes an opening degree of the accelerator pedal and an opening degree of the brake pedal. In addition, in a correspondence between each group of opening degrees and a torque, the opening degree of the accelerator pedal is positively correlated with the torque, and the opening degree of the brake pedal is negatively correlated with the torque. In this case, the main control unit 201 may obtain, in real time, a current opening degree of the accelerator pedal that the user steps on and a current opening degree of the brake pedal that the user steps on, and query the preset mapping relationship between an opening degree of a pedal and a torque, to obtain a target torque corresponding to this group of opening degrees: the current opening degree of the accelerator pedal and the current opening degree of the brake pedal.

In a further example, in the rotational speed/rotation angle control mode of the manual parking mode, a preset mapping relationship between a torque and wheel rotation information may be further configured on the vehicle. After determining, in the foregoing manner, the target torque corresponding to the current opening degree of the vehicle pedal, the main control unit 201 may further determine, by querying the preset mapping relationship between a torque and wheel rotation information, target wheel rotation information corresponding to the target torque. The preset mapping relationship between an opening degree of a pedal and a torque may be obtained through experimental testing. The preset mapping relationship between a torque and wheel rotation information may be configured according to a requirement of the vehicle (for example, a travel mode of the vehicle). The two mapping relationships may be stored in a vehicle-mounted memory; or may be stored in the main control unit 201; or may be stored in another component of the vehicle, and is obtained by the main control unit 201 from the another component as needed. This is not specifically limited.

In a further example, it is assumed that, when the vehicle is configured to be in a first mode, even if the user does not step on the accelerator pedal or the brake pedal, the vehicle can still slowly travel at a vehicle speed corresponding to a specified crawl torque. In this case, after determining the target torque corresponding to the current opening degree of the vehicle pedal, if the target torque is less than the crawl torque configured in the first mode, the main control unit 201 may use the crawl torque as the target torque. For example, if the determined target torque is 80 N and the crawl torque is 100 N, the main control unit 201 may select 100 N as a final target torque. If the determined target torque is 120 N and the crawl torque is 100 N, the main control unit 201 may still use 120 N as the target torque. In some scenarios, the first mode may also be referred to as a comfort mode, an economic mode, a normal mode, a custom mode, or the like. Alternatively, in some other scenarios, for example, in a sport mode, a dynamic mode, or a radical mode, a corresponding crawl torque may also be configured. In this case, the vehicle may also correct the target torque based on the corresponding crawl torque in these modes. In this way, arbitration is performed on the target torque by using the crawl torque, to ensure that the vehicle travels at a vehicle speed not lower than the vehicle speed corresponding to the crawl torque. Even in a parking mode, it can still be ensured that a vehicle speed of the vehicle meets a requirement of a current travel mode.

In a further example, a target torque obtained through arbitration being greater than the torque threshold in the foregoing parking condition indicates that the vehicle is no longer in the parking state after the vehicle speed is adjusted based on the target torque obtained through arbitration. Further, this indicates that the vehicle is currently preparing to exit the parking state or has exited the parking state. In this case, the main control unit 201 may no longer control the rotational speed of the motor based on the rotational speed/rotational speed control mode, but may switch back to the default torque control mode, to meet a non-parking requirement of the vehicle.

In a further example, the travel mode of the vehicle usually includes the first mode and a second mode, the first mode is also referred to as the comfort mode, the economic mode, the normal mode, the custom mode, or the like, and the second mode is also referred to as a sport mode, a dynamic mode, a radical mode, or the like. In the first mode, a change in the vehicle speed of the vehicle needs to be smooth. In the second mode, the vehicle speed the vehicle is expected to meet a requirement as quickly as possible. Therefore, the preset mapping relationship between a torque and wheel rotation information may further include a mapping relationship between a torque and wheel rotation information that corresponds to the first mode and a mapping relationship between a torque and wheel rotation information that corresponds to the second mode. When the travel mode of the vehicle is the first mode, only the mapping relationship between a torque and wheel rotation information that corresponds to the first mode may be configured on the vehicle. When the travel mode of the vehicle is the second mode, only the mapping relationship between a torque and wheel rotation information that corresponds to the second mode may be configured on the vehicle. Alternatively, in some scenarios, both the mapping relationship between a torque and wheel rotation information that corresponds to the first mode and the mapping relationship between a torque and wheel rotation information that corresponds to the second mode may be configured on the vehicle. Each time the vehicle is started or when mode switching needs to be performed, the user may indicate, through a display, voice, a gesture, a button, or the like, the vehicle to switch to a target travel mode. In this way, during traveling, the vehicle may determine, by using a mapping relationship between a torque and wheel rotation information that corresponds to the target travel mode, target wheel rotation information corresponding to a target torque obtained through arbitration.

For example, the wheel rotation information is a wheel rotational speed. Table 3 shows a segment of a mapping relationship between a torque and a wheel rotational speed that corresponds to the first mode according to an embodiment of this application.

Table 3

| Torque (N) | Wheel rotational speed (r/ms) |
|---|---|
| [0, 50) | 300 |
| [50, 100) | 350 |
| [100, 150) | 400 |
| [150, 200) | 450 |

For example, Table 4 shows a segment of a mapping relationship between a torque and a wheel rotational speed that corresponds to the second mode according to an embodiment of this application.

Table 4

| Torque (N) | Wheel rotational speed (r/ms) |
|---|---|
| [0, 10) | 260 |
| [10, 20) | 270 |
| [20, 30) | 280 |
| [30, 40) | 290 |
| [50, 60) | 300 |
| [60, 70) | 310 |
| [70, 80) | 320 |
| [80, 90) | 330 |
| [90, 100) | 340 |

It can be learned from both Table 3 and Table 4 that, in a mapping relationship between a torque and a wheel rotational speed that corresponds to any travel mode of the vehicle, one torque range corresponds to one wheel rotational speed. For example, in the mapping relationship between a torque and a wheel rotational speed that corresponds to the second mode, each torque range with a width of 50 N corresponds to one wheel rotational speed; and in the mapping relationship between a torque and a wheel rotational speed that corresponds to the first mode, each torque range with a width of 10 N corresponds to one wheel rotational speed. In this way, the vehicle is adjusted to a target torque in a more coarse-grained manner in the second mode, to meet a requirement for a response speed in the second mode, or is smoothly adjusted to a target drive current in the first mode, to meet a requirement for user experience in the first mode.

In a further example, after determining, based on a mapping relationship between a torque and wheel rotation information that corresponds to a current travel mode of the vehicle, target wheel rotation information corresponding to a target torque, the main control unit 201 may further correct the target wheel rotation information by using current vehicle speed information of the vehicle. Corrected target wheel rotation information is between wheel rotation information corresponding to the current vehicle speed information of the vehicle and the target wheel rotation information existing before the correction, for example, may be an average value of the wheel rotation information corresponding to the current vehicle speed information of the vehicle and the target wheel rotation information existing before the correction. For example, it is assumed that the wheel rotation information is a wheel rotational speed, a target torque obtained through arbitration is 120 N, a corresponding target wheel rotational speed is 350 r/ms, and a wheel rotational speed corresponding to a current vehicle speed is 700 r/ms. In this case, after 350 rims is corrected by using 700 r/ms, a final target wheel rotational speed of 500 r/ms may be obtained. In this way, the wheel rotational speed is controlled to decrease from 700 r/ms to 500 r/ms instead of directly decreasing to 350 r/ms, so that the wheel rotational speed can be smoothly adjusted during parking control, to avoid sudden acceleration or deceleration of the vehicle, and improve driving experience of the user.

It should be noted that determining, by using the preset mapping relationship between an opening degree of a pedal and a torque and the preset mapping relationship between a torque and wheel rotation information, the target wheel rotation information corresponding to the current opening degree of the pedal is merely an optional implementation. In another optional implementation, a preset mapping relationship between an opening degree of a pedal and wheel rotation information, for example, a preset mapping relationship between the opening degree of the accelerator pedal and wheel rotation information, may alternatively be directly configured on the vehicle. The main control unit 201 may directly determine, by querying the mapping relationship, target wheel rotation information corresponding to a current opening degree of the accelerator pedal of the vehicle. In this way, parking control efficiency can be further improved.

Step 602: The main control unit 201 sends the target wheel rotation information to the motor control unit 202.

Step 603: The motor control unit 202 sends a first drive electrical signal to the motor 203 based on the target wheel rotation information.

Step 604: The motor control unit 202 obtains motor rotation information of the motor that is collected by the motor sensor 205.

Step 605: The motor control unit 202 sends a second drive electrical signal to the motor 203 based on the motor rotation information and the target wheel rotation information.

It should be noted that, for specific implementations of step 602 to step 605, reference may be directly made to step 401 to step 404. Details are not described herein again.

Step 606: The main control unit 201 switches back to the torque control mode when a current status of the vehicle meets a parking end condition.

For example, the parking end condition may include at least one of the following conditions: The vehicle speed is not lower than the preset vehicle speed, the rotational speed of the motor is not lower than the preset rotational speed, the torque requested by the driver is not less than the torque threshold, the change rate of the torque requested by the driver is not less than the first change rate threshold, the opening degree of the accelerator pedal is not less than the first opening degree threshold, the change rate of the opening degree of the accelerator pedal of the vehicle is not less than the second change rate threshold, the opening degree of the brake pedal is not greater than the second opening degree threshold, and the change rate of the opening degree of the brake pedal is not less than the third change rate threshold.

For example, when a travel speed of the vehicle increases, or the rotational speed of the motor of the vehicle increases, or the accelerator of the vehicle is suddenly stepped on heavily, or the brake of the vehicle is suddenly loosened, it can be considered that the vehicle has very likely ended parking. In this case, the vehicle may switch back to the torque control mode.

For example, in some scenarios, during manual parking, the user no longer needs to park the vehicle for some reasons. In this case, the user may loosen the brake pedal, and may heavily step on the accelerator pedal. In this case, the main control unit 201 detects that the opening degree of the brake pedal decreases to the second opening degree threshold and the opening degree of the accelerator pedal increases to the first opening degree threshold. Therefore, the main control unit 201 may determine that parking currently needs to be ended. In this case, the main control unit 201 may switch from a rotational speed/rotation angle control mode of a previous parking mode back to the default torque control mode. To be specific, the main control unit 201 sends, to the motor control unit 202, a target torque corresponding to an opening degree of a current pedal; the motor control unit 202 determines a third drive electrical signal based on the target torque, and then sends the third drive electrical signal to the motor 203; and the main control unit 201 further corrects, by using a rotational speed of the wheel 12 that is collected by the wheel sensor 204, the target torque sent to the motor control unit 202. For specific implementation logic, refer to related descriptions of FIG. 3.

In the foregoing implementation solution 2, the vehicle uses the rotational speed/rotation angle control mode during manual parking, and switches back to the default torque control mode after the manual parking ends. In this way, a high-precision and high-speed parking control policy can be used during manual parking, to reduce parking hesitation, a possibility of getting stuck, oversteering after the vehicle crosses an obstacle, and the like in a manual driving scenario. In addition, in a non-parking scenario, it can be ensured that there is sufficient time between a moment at which the user steps on a pedal and a moment at which the user is aware of a response of the vehicle, to improve driving experience of the user.

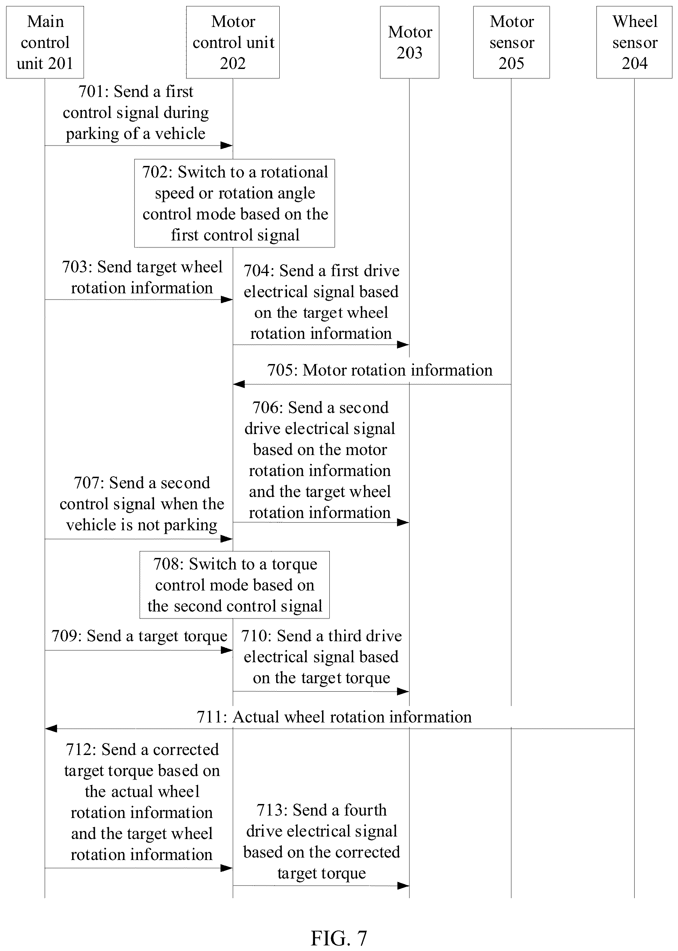

In embodiments of this application, two control modes may be configured in a motor control unit 202: a rotational speed/rotation angle control mode and a torque control mode. When the torque control mode is used, the motor control unit 202 may control, based on a torque, a motor to rotate, to enable a rotational speed of the motor to remain at a specific torque. When the rotational speed/rotation angle control mode is used, the motor control unit 202 may control, based on a rotational speed/rotation angle, the motor to rotate, to enable the rotational speed of the motor to remain at a specific rotational speed or rotation angle. Switching between the two control modes of the motor control unit 202 may be controlled and implemented by a main control unit 201. For example, FIG. 7 is a diagram of a specific process of a parking control method according to an embodiment of this application. The process includes the following steps.

Step 701: The main control unit 201 sends a first control signal to the motor control unit 202 during parking of a vehicle.

For example, if the vehicle is configured to be in an automatic parking assist mode, the main control unit 201 may include a VCU and an MDC. After receiving an automatic parking assist request from a user, the VCU determines that the vehicle has an intention of parking. In this case, the VCU may send first indication information to the MDC. After receiving the first instruction information, the MDC may take over all operations of the VCU, and may send the first control signal to the motor control unit 202, to control the motor control unit 202 to switch to the rotational speed/rotation angle control mode.

For example, if the vehicle is configured to be in a manual parking mode, the main control unit 201 may include a VCU. When detecting that a current status of the vehicle meets the parking trigger condition shown in the foregoing implementation solution 2, the VCU determines that the vehicle has an intention of parking. In this case, the VCU may send the first control signal to the motor control unit 202, to control the motor control unit 202 to switch to the rotational speed/rotation angle control mode.

It should be noted that all of the foregoing examples are described by using an example in which the motor control unit 202 is controlled to switch to the rotational speed/rotation angle control mode when the vehicle starts parking. However, in an actual operation, a moment at which the motor control unit 202 is controlled to switch to the rotational speed/rotation angle control mode may alternatively be a moment earlier than or later than a moment at which the vehicle starts parking, for example, may be any moment in a time period between a moment at which a parking intention of the vehicle is detected and a moment at which the vehicle ends parking. This is not specifically limited.

Step 702: The motor control unit 202 switches to the rotational speed/rotation angle control mode based on the first control signal.

For example, in the motor control unit 202, the torque control mode is a default control mode. When no first control signal is received, the torque control mode in the motor control unit 202 is in an active state, and the rotational speed/rotation angle control mode in the motor control unit 202 is in an inactive state. When receiving the first control signal, the motor control unit 202 may switch the torque control mode to an inactive state, and switch the rotational speed/rotation angle control mode to an active state, to switch to the rotational speed/rotation angle control mode.

Step 703: The main control unit 201 sends target wheel rotation information to the motor control unit 202.

Herein, during parking of the vehicle, the main control unit 201 may send target wheel rotation information to the motor control unit 202 based on a large closed-loop periodicity. For example, it is assumed that the large closed-loop periodicity is 10 ms. In this case, the main control unit 201 may determine target wheel rotation information once every 10 ms, and send the target wheel rotation information to the motor control unit 202.

Step 704: The motor control unit 202 sends a first drive electrical signal to the motor 203 based on the target wheel rotation information.

Step 705: The motor control unit 202 obtains motor rotation information of the motor that is collected by a motor sensor 205.

Step 706: The motor control unit 202 sends a second drive electrical signal to the motor 203 based on the motor rotation information and the target wheel rotation information.

Herein, after the motor control unit 202 switches to the rotational speed/rotation angle control mode, the motor control unit 202 may perform a correction operation on a drive electrical signal based on a small closed-loop periodicity. For example, it is assumed that the small closed-loop periodicity is 2 ms. In this case, the motor control unit 202 may obtain, once every 2 ms, motor rotation information collected by the motor sensor 205; and correct, by using the motor rotation information obtained within the 2 ms and target wheel rotation information obtained within a current 10-ms large closed-loop periodicity, a drive electrical signal to be sent to the motor 203.

Step 707: The main control unit 201 sends a second control signal to the motor control unit 202 when the vehicle is not parking.

For example, after determining that the vehicle ends parking, the main control unit 201 may send the second control signal to the motor control unit 202, to control the motor control unit 202 to switch back to the default torque control mode.

Further, for example, if the vehicle is configured to be in the automatic parking assist mode, the main control unit 201 may include a VCU and an MDC. When detecting that a current status of the vehicle meets the parking ending trigger condition shown in the foregoing implementation solution 1, the MDC determines that the vehicle has an intention of ending parking. In this case, the MDC may send second indication information to the VCU. After receiving the second indication information, the VCU may take over all operations of the MDC, and may send the second control signal to the motor control unit 202, to control the motor control unit 202 to switch to the torque control mode.

Further, for example, if the vehicle is configured to be in the manual parking mode, the main control unit 201 may include a VCU. When detecting that a current status of the vehicle meets the parking ending trigger condition shown in the foregoing implementation solution 2, the VCU determines that the vehicle has an intention of ending parking. In this case, the VCU may send the second control signal to the motor control unit 202, to control the motor control unit 202 to switch to the torque control mode.

It should be noted that all of the foregoing examples are described by using an example in which the motor control unit 202 is controlled to switch to the torque control mode when the vehicle starts to end parking. However, in an actual operation, a moment at which the motor control unit 202 is controlled to switch to the torque control mode may alternatively be a moment earlier than or later than a moment at which the vehicle starts to end parking, for example, may be a moment later than and close to a moment at which a parking ending intention of the vehicle is detected. This is not specifically limited.

Step 708: The motor control unit 202 switches to the torque control mode based on the second control signal.

For example, when receiving the first control signal, the motor control unit 202 may switch the rotational speed/rotation angle control mode to the inactive state, and switch the torque control mode to the active state, to switch to the torque control mode.

Step 709: The main control unit 201 sends a target torque to the motor control unit 202.

Herein, when the vehicle is not parking, the main control unit 201 may send a target torque to the motor control unit 202 based on a large closed-loop periodicity. For example, it is assumed that the large closed-loop periodicity is 10 ms. In this case, the main control unit 201 may determine a target torque once every 10 ms, and send the target torque to the motor control unit 202.

Step 710: The motor control unit 202 sends a third drive electrical signal to the motor 203 based on the target torque.

Step 711: The main control unit 201 obtains actual wheel rotation information collected by the wheel sensor 204.

Step 712: The main control unit 201 sends a corrected target torque to the motor control unit 202 based on the actual wheel rotation information and the target wheel rotation information.

Step 713: The motor control unit 202 sends a fourth drive electrical signal to the motor 203 based on the corrected target torque.

Herein, after the motor control unit 202 switches to the torque control mode, the main control unit 201 may perform a correction operation on a target torque based on a small closed-loop periodicity. For example, it is assumed that the small closed-loop periodicity is 2 ms. In this case, the main control unit 201 may obtain, once every 2 ms, actual wheel rotation information collected by the wheel sensor 204, and correct, by using the actual wheel rotation information obtained within the 2 ms and target wheel rotation information obtained within a current 10-ms large closed-loop periodicity, a target torque to be sent to the motor control unit 202, to drive the motor control unit 202 to correct a drive electrical signal to be sent to the motor 203.

In the foregoing control solution, the motor control unit may switch to the rotational speed/rotation angle control mode during parking. In this way, the motor control unit can control, by using a received wheel rotational speed/wheel rotation angle, the motor to stably remain at a specific rotational speed, and can further accurately and quickly correct a next-step rotational speed of the motor by using an actual rotational speed of the motor that is collected by the motor sensor at high collection frequency, to implement efficient and high-precision control during parking, reduce a quantity of mistakes during parking, and further reduce a corresponding number of gear changes. In addition, the motor control unit may alternatively switch to the torque control mode when the vehicle is not parking, so that the motor control unit can control, within specific buffer time by using a received torque, the motor to rotate. In this way, when the vehicle is not parking, specific time is reserved between a moment at which a driver steps on an accelerator pedal and a moment at which the driver is aware of a change in a vehicle speed, to improve driving experience of the driver.

It should be understood that the foregoing content describes specific implementations of the parking control solution only by using a vehicle as an example. The parking control solution may be further extended to any device or system that has a requirement for parking efficiency or precision. For example, the parking control solution may be further applied to any mobile device with a parking function, including but not limited to a ship, an airplane, an uncrewed aerial vehicle, a train, a van, a truck, and the like. Alternatively, the parking control solution may be further applied to the smart home field. During parking of a mobile robot (for example, a robotic vacuum cleaner, a robotic mopping device, or a mobile smart home appliance), a target rotational speed of a wheel of the mobile robot is sent to a motor control unit, and a closed-loop control policy is executed on the motor control unit side, so that the mobile robot can smoothly and quickly cross an obstacle terrain.

In addition, with evolution of a system architecture and emergence of a new scenario, the parking control solution provided in this application is also applicable to a similar technical problem. This is not specifically limited in this application.

In addition, the foregoing embodiments are described only by using an example in which the parking control method is performed by a control unit in a vehicle. The parking control method may alternatively be performed by another device, for example, a cloud server, a terminal device, or another vehicle. A to-be-controlled vehicle exchanges related information with the cloud server, the terminal device, or the another vehicle, to implement the closed-loop parking control method performed by the motor control unit in the foregoing content.

Further, names of the foregoing information are merely examples. With evolution of communication technologies, the name of any of the foregoing information may be changed. However, regardless of how the names of the information are changed, provided that meanings of the information are the same as those of the information in this application, the information falls within the protection scope of this application.

The foregoing mainly describes the solutions provided in this application from a perspective of interaction between network elements. It can be understood that, in the foregoing implementations, to implement the foregoing functions, the network elements include corresponding hardware structures and/or software modules for performing the functions. A person skilled in the art should be easily aware that, in combination with units and algorithm steps in the examples described in embodiments disclosed in this specification, the present invention can be implemented by hardware or a combination of hardware and computer software. Whether a function is performed by hardware or hardware driven by computer software depends on particular applications and design constraints of the technical solutions. A person skilled in the art may use different methods to implement the described functions for each particular application. However, it should not be considered that the implementation goes beyond the scope of the present invention.

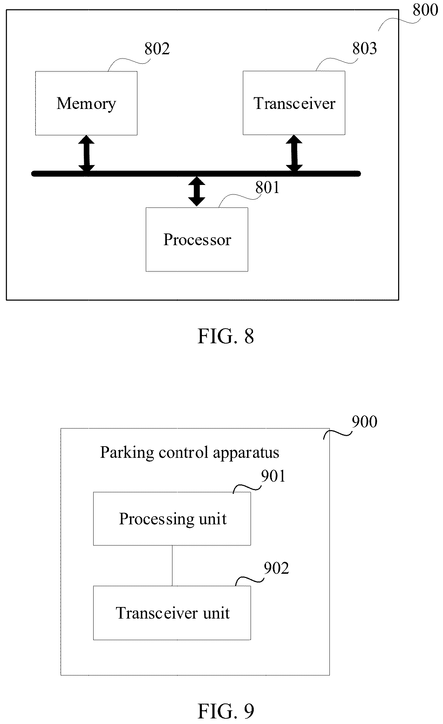

FIG. 8 is a diagram of a structure of a parking control apparatus according to an embodiment of this application. As shown in FIG. 8, the parking control apparatus 800 may include a processor 801 and a transceiver 803. Optionally, the parking control apparatus 800 may further include a memory 802. The memory 802 is configured to store instructions to be executed by the processor 801, or store data needed for running instructions by the processor 801, or store data generated after the processor 801 runs instructions, for example, the mapping relationships and the transition gradient tables used in the foregoing method embodiments. The processor 801 may read the instructions stored in the memory 802, to invoke the transceiver 803 to implement the methods shown in the foregoing method embodiments. Optionally, the parking control apparatus 800 may further include a bus system. The processor 801, the memory 802, and the transceiver 803 may be connected through the bus system.

In some possible implementations, the parking control apparatus 800 can correspondingly implement the behaviors and the functions of the main control unit in the foregoing method embodiments. For example, the parking control apparatus 800 may be the main control unit 201, for example, a VCU, an MDC, or a VDC; or may be an apparatus that can implement the functions implemented by the main control unit 201, for example, a chip, a chip system, a circuit, or a circuit system disposed in a VCU, an MDC, or a VDC. The transceiver 803 may be configured to perform all sending or receiving operations performed by the main control unit 201 in any one of the embodiments shown in FIG. 7, for example, step 701 and step 707 in the embodiment shown in FIG. 7; and/or configured to support other processes of the technologies described in this specification. The processor 801 is configured to perform all operations, other than the sending and receiving operations, that are performed by the main control unit 201 in the embodiment shown in FIG. 7.

For example, the transceiver 803 is configured to: send a first control signal to a motor control unit during parking of a vehicle, where the first control signal is used to indicate the motor control unit to switch to a rotational speed/rotation angle control mode; and send a second control signal to the motor control unit when the vehicle is not parking, where the second control signal is used to control the motor control unit to switch to a torque control mode.

For example, the processor 801 is further configured to determine target wheel rotation information of the vehicle during parking of the vehicle, and the transceiver 803 is further configured to send the target wheel rotation information of the vehicle to the motor control unit.

In some possible implementations, the parking control apparatus 800 can correspondingly implement the behaviors and the functions of the motor control unit in the foregoing method embodiments. For example, the parking control apparatus 800 may be the motor control unit 202; or may be an apparatus that can implement the functions implemented by the motor control unit 202, for example, a chip, a chip system, a circuit, or a circuit system disposed in the motor control unit 202. The transceiver 803 may be configured to perform all sending or receiving operations performed by the motor control unit 202 in the embodiment shown in FIG. 7. The processor 801 is configured to perform all operations, other than the sending and receiving operations, that are performed by the motor control unit 202 in the embodiment shown in FIG. 7, for example, step 702 to step 708 in the embodiment shown in FIG. 7; and/or configured to support other processes of the technologies described in this specification.

For example, the transceiver 803 is configured to receive a first control signal or a second control signal sent by a main control unit; and the processor 801 is configured to switch to a rotational speed/rotation angle control mode based on the first control signal, and switch to a torque control mode based on the second control signal.

For example, the transceiver 803 is further configured to: during parking of a vehicle, receive target wheel rotation information from the main control unit, send a first drive electrical signal to a motor based on the target wheel rotation information, receive motor rotation information from a motor sensor, and send a second drive electrical signal to the motor based on the motor rotation information and the target wheel rotation information. The drive electrical signal (including the first drive electrical signal and the second drive electrical signal) is used to drive the motor to rotate, and the rotation of the motor is used to drive a wheel to rotate.

For concepts, explanations, detailed descriptions, and other steps that are related to the technical solutions of the parking control apparatus provided in embodiments of this application and that are related to the parking control apparatus 800, refer to descriptions of the content in the foregoing methods or other embodiments. Details are not described herein again.

Based on the foregoing embodiments and a same concept, FIG. 9 is a diagram of another parking control apparatus according to an embodiment of this application. The parking control apparatus 900 may include a processing unit 901 and a transceiver unit 902, and may further include a storage unit. The transceiver unit 902 may be a transceiver, an input/output interface, a pin, or a circuit. When the parking control apparatus 900 includes a storage unit, the storage unit is configured to store computer instructions. The processing unit 901 is communicatively connected to the storage unit, and is configured to execute the computer instructions stored in the storage unit, to enable the parking control apparatus 900 to perform the method performed by the main control unit 201 or the motor control unit 202 in any one of the foregoing embodiments. The processing unit 901 may be a general-purpose central processing unit (CPU), a microprocessor, or an application-specific integrated circuit (application-specific integrated circuit, ASIC). The storage unit is a storage unit in a chip, for example, a register or a cache. Alternatively, the storage unit may be a storage unit that is in the parking control apparatus 900 and that is located outside the chip, for example, a read-only memory (read-only memory, ROM), another type of static storage device that can store static information and instructions, or a random access memory (random access memory, RAM).

In some scenarios, the parking control apparatus 900 may be the main control unit 201, for example, a VCU, an MDC, or a VDC; or may be an apparatus that can implement the functions implemented by the main control unit 201, for example, a chip, a chip system, a circuit, or a circuit system disposed in a VCU, an MDC, or a VDC. The transceiver unit 902 is invoked by the processing unit 901 to: send a first control signal to a motor control unit during parking of a vehicle, where the first control signal is used to indicate the motor control unit to switch to a rotational speed/rotation angle control mode; and send a second control signal to the motor control unit when the vehicle is not parking, where the second control signal is used to control the motor control unit to switch to a torque control mode.

In a possible implementation, the processing unit 901 is further configured to determine target wheel rotation information of the vehicle during parking of the vehicle, and the transceiver unit 902 is further configured to send the target wheel rotation information of the vehicle to the motor control unit.

In a possible implementation, the target wheel rotation information may include a target rotational speed of a wheel and/or a target rotation angle of the wheel.

In a possible implementation, when the vehicle is configured to be in an automatic parking assist mode, the processing unit 901 is specifically configured to receive an automatic parking assist request, and determine that the vehicle is to park.

In a possible implementation, when the vehicle is configured to be in the automatic parking assist mode, the processing unit 901 is specifically configured to: during parking of the vehicle, input a current location of the vehicle and a location of a target parking space to a preset trajectory planning algorithm, and obtain a parking trajectory output by the trajectory planning algorithm, where the parking trajectory includes a vehicle speed needed at each step for the vehicle to park into the target parking space from the current location; and then determine a next-step target vehicle speed based on the parking trajectory, and determine, based on a preset mapping relationship between a vehicle speed and wheel rotation information, target wheel rotation information corresponding to the target vehicle speed.

In a possible implementation, when the vehicle is configured to be in a manual parking mode, the processing unit 901 is specifically configured to: when a status of the vehicle meets at least one of the following conditions, determine that the vehicle is to park: A vehicle speed is lower than a preset vehicle speed, a rotational speed of a motor is lower than a preset rotational speed, a torque requested by a driver is less than a torque threshold, a change rate of the torque requested by the driver is less than a first change rate threshold, an opening degree of an accelerator pedal is less than a first opening degree threshold, a change rate of the opening degree of the accelerator pedal is less than a second change rate threshold, an opening degree of a brake pedal is greater than a second opening degree threshold, and a change rate of the opening degree of the brake pedal is less than a third change rate threshold.

In a possible implementation, when the vehicle is configured to be in the manual parking mode, the processing unit 901 is specifically configured to: during parking of the vehicle, determine, by querying a preset mapping relationship between an opening degree of a pedal and a torque, a target torque corresponding to a current opening degree of a pedal of the vehicle, and determine, by querying a preset mapping relationship between a torque and wheel rotation information, target wheel rotation information corresponding to the target torque.

In a further implementation, after determining the target torque corresponding to the current opening degree of the pedal of the vehicle, and before determining, by querying the preset mapping relationship between a torque and wheel rotation information, the target wheel rotation information corresponding to the target torque, the processing unit 901 is further configured to: if determining that a travel mode of the vehicle is configured to be a first mode, where a crawl torque corresponding to the first mode is greater than the target torque, use the crawl torque as the target torque.

In a further implementation, the preset mapping relationship between a torque and wheel rotation information includes a mapping relationship between a torque and wheel rotation information that corresponds to the first mode and a mapping relationship between a torque and wheel rotation information that corresponds to a second mode. In a mapping relationship between a torque and wheel rotation information that corresponds to either travel mode, one torque range corresponds to one piece of rotation information. A width of a torque range in the mapping relationship between a torque and wheel rotation information that corresponds to the second mode is less than a width of a torque range in the mapping relationship between a torque and wheel rotation information that corresponds to the first mode. In this case, the processing unit 901 is specifically configured to determine, by querying a mapping relationship between a torque and wheel rotation information that corresponds to the travel mode of the vehicle, the target wheel rotation information corresponding to the target torque.

In a further implementation, after the processing unit 901 determines the target wheel rotation information corresponding to the target torque, and before the transceiver unit 902 sends the target wheel rotation information to the motor control unit, the processing unit 901 is further configured to correct the target wheel rotation information by using current vehicle speed information of the vehicle, where corrected target wheel rotation information is between wheel rotation information corresponding to the current vehicle speed information of the vehicle and the target wheel rotation information existing before the correction.

In a possible implementation, the processing unit 901 is further configured to: after the vehicle ends parking, determine target torque information corresponding to the target wheel rotation information. The transceiver unit 902 is further configured to send the target torque information to the motor control unit, and receive rotation information of a wheel from a wheel sensor. The processing unit 901 is further configured to correct the target torque information based on the rotation information of the wheel and the target wheel rotation information. The transceiver unit 902 is further configured to send corrected target torque information to the motor control unit.

In a further implementation, when the vehicle is configured to be in the automatic parking assist mode, when determining that a status of the vehicle meets at least one of the following conditions, the processing unit 901 may determine that the vehicle ends parking: An opening degree of an accelerator pedal is greater than 0; an opening degree of a brake pedal is greater than a preset opening degree threshold, and the preset opening degree threshold is greater than 0; a steering wheel is turned; a parking position is used; and a parking end request is received.

In a further implementation, if the vehicle is configured to be in the manual parking mode, when determining that the status of the vehicle meets at least one of the following conditions, the processing unit 901 may determine that the vehicle ends parking: The vehicle speed is not lower than the preset vehicle speed, the rotational speed of the motor is not lower than the preset rotational speed, the torque requested by the driver is not less than the torque threshold, the change rate of the torque requested by the driver is not less than the first change rate threshold, the opening degree of the accelerator pedal is not less than the first opening degree threshold, the change rate of the opening degree of the accelerator pedal is not less than the second change rate threshold, the opening degree of the brake pedal is not greater than the second opening degree threshold, and the change rate of the opening degree of the brake pedal is not less than the third change rate threshold.

It can be understood that, for functions of the units in the parking control apparatus 900, reference may be made to implementations of corresponding method embodiments. Details are not described herein again.

It should be understood that division into the units in the parking control apparatus 900 is merely logical function division. During actual implementation, all or some of the units may be integrated into one physical entity, or the units may be physically separated. In this embodiment of this application, the processing unit 901 may be implemented by the processor 801 in FIG. 8, and the transceiver unit 902 may be implemented by the transceiver 803 in FIG. 8.

According to the foregoing parking control solution, an embodiment of this application further provides a parking control apparatus. The parking control apparatus includes a processor. The processor is connected to a memory. The memory is configured to store a computer program. The processor is configured to execute the computer program stored in the memory, to enable the parking control apparatus to implement the method for the main control unit or the motor control unit in any one of the embodiments shown in FIG. 4 to FIG. 7.

According to the foregoing parking control solution, an embodiment of this application further provides a parking control apparatus. The parking control apparatus includes a processor and a memory. The memory is configured to store computer program instructions. The processor is configured to run the computer program instructions to implement the method for the main control unit or the motor control unit in any one of the embodiments shown in FIG. 4 to FIG. 7.

According to the foregoing parking control solution, an embodiment of this application further provides an electronic device, including the foregoing parking control system. In some embodiments, the electronic device is a mobile device, for example, a vehicle, a ship, an airplane, or a mobile robot.

According to the foregoing parking control solution, an embodiment of this application further provides a chip. The chip may include a processor and an interface. The processor is configured to read instructions through the interface, to perform the method for the main control unit or the motor control unit in any one of the embodiments shown in FIG. 4 to FIG. 7.

According to the foregoing parking control solution, an embodiment of this application further provides a computer-readable storage medium. The computer-readable storage medium stores a computer program. When the computer program is run, the method for the main control unit or the motor control unit in any one of the embodiments shown in FIG. 4 to FIG. 7 is implemented.

According to the foregoing parking control solution, an embodiment of this application further provides a computer program product. When the computer program product runs on a processor, the method for the main control unit or the motor control unit in any one of the embodiments shown in FIG. 4 to FIG. 7 is implemented.

The terms "component", "unit", "system", and the like used in this specification indicate a computer-related entity, hardware, firmware, a combination of hardware and software, software, or software being executed. For example, a component may be, but is not limited to, a process that is run on a processor, a processor, an object, an executable file, an execution thread, a program, and/or a computer. As illustrated by using figures, both a computing device and an application that is run on the computing device may be components. One or more components may reside in a process and/or an execution thread, and a component may be located on one computer and/or distributed between two or more computers. In addition, these components may be executed from various computer-readable media that store various data structures. For example, the component may perform communication through a local process and/or a remote process based on a signal with one or more data packets (for example, data from two components that interact with another component in a local system, a distributed system, and/or a network, for example, an internet that interacts with another system through a signal).

A person of ordinary skill in the art may be aware that various illustrative logical blocks (illustrative logical block) and steps (step) described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application. However, it should not be considered that the implementation goes beyond the scope of this application.

It can be clearly understood by a person skilled in the art that, for ease and brevity of description, for detailed working processes of the foregoing systems, apparatuses, and units, reference may be made to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application.

The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A parking control system, comprising a main control unit, a motor control unit, a motor, and a motor sensor, wherein

   the main control unit is configured to send target wheel rotation information to the motor control unit during parking of a vehicle;
   the motor is configured to rotate under the action of a drive electrical signal of the motor control unit, wherein the rotation is used to drive a wheel of the vehicle to rotate;
   the motor control unit is configured to send a first drive electrical signal to the motor based on the target wheel rotation information;
   the motor sensor is configured to send collected motor rotation information of the motor to the motor control unit; and
   the motor control unit is further configured to send a second drive electrical signal to the motor based on the motor rotation information and the target wheel rotation information.

2. The system according to claim 1, wherein the target wheel rotation information comprises a target rotational speed of the wheel and/or a target rotation angle of the wheel, and the motor rotation information comprises a rotational speed of the motor and/or a rotation angle of the motor.

3. The system according to claim 1 or 2, wherein the vehicle is configured to be in an automatic parking assist mode; and the main control unit is configured to:
   receive an automatic parking assist request, and determine that the vehicle starts to park.

4. The system according to claim 3, wherein the main control unit is configured to:

   during parking of the vehicle, input a current location of the vehicle and a location of a target parking space to a preset trajectory planning algorithm, and obtain a parking trajectory output by the trajectory planning algorithm, wherein the parking trajectory comprises a vehicle speed and a vehicle turning angle that are needed at each step for the vehicle to park into the target parking space from the current location; and
   determine a target vehicle speed and a target vehicle turning angle based on the parking trajectory, send the target vehicle turning angle to a steering mechanism of the vehicle, determine, based on a preset mapping relationship between a vehicle speed and wheel rotation information, target wheel rotation information corresponding to the target vehicle speed, and send the target wheel rotation information to the motor control unit.

5. The system according to claim 1 or 2, wherein the vehicle is configured to be in a manual parking mode; and the main control unit is configured to:
   when determining that a status of the vehicle meets at least one of the following conditions, determine that the vehicle starts to park:
   a vehicle speed is lower than a preset vehicle speed; a rotational speed of the motor is lower than a preset rotational speed; a torque requested by a driver is less than a torque threshold; a change rate of the torque requested by the driver is less than a first change rate threshold; an opening degree of an accelerator pedal is less than a first opening degree threshold; a change rate of the opening degree of the accelerator pedal is less than a second change rate threshold; an opening degree of a brake pedal is greater than a second opening degree threshold; and a change rate of the opening degree of the brake pedal is less than a third change rate threshold.

6. The system according to claim 5, wherein the main control unit is configured to:
   during parking of the vehicle, determine, by querying a preset mapping relationship between an opening degree of a pedal and a torque, a target torque corresponding to a current opening degree of a pedal of the vehicle, and determine, by querying a preset mapping relationship between a torque and wheel rotation information, target wheel rotation information corresponding to the target torque.

7. The system according to claim 6, wherein after determining the target torque corresponding to the current opening degree of the pedal of the vehicle, and before determining, by querying the preset mapping relationship between a torque and wheel rotation information, the target wheel rotation information corresponding to the target torque, the main control unit is further configured to:
if determining that a travel mode of the vehicle is configured to be a first mode, wherein a crawl torque corresponding to the first mode is greater than the target torque, use the crawl torque as the target torque.

8. The system according to claim 6 or 7, wherein the preset mapping relationship between a torque and wheel rotation information comprises a mapping relationship between a torque and wheel rotation information that corresponds to the first mode and a mapping relationship between a torque and wheel rotation information that corresponds to a second mode; in a mapping relationship between a torque and wheel rotation information that corresponds to either travel mode, one torque range corresponds to one piece of wheel rotation information; and a width of the torque range in the mapping relationship between a torque and wheel rotation information that corresponds to the second mode is less than a width of the torque range in the mapping relationship between a torque and wheel rotation information that corresponds to the first mode; and
the main control unit is configured to:
determine, by querying a mapping relationship between a torque and wheel rotation information that corresponds to the travel mode of the vehicle, the target wheel rotation information corresponding to the target torque.

9. The system according to any one of claims 1 to 8, wherein before sending the target wheel rotation information to the motor control unit, the main control unit further comprises:
correcting the target wheel rotation information by using current vehicle speed information of the vehicle, wherein the corrected target wheel rotation information is between wheel rotation information corresponding to the current vehicle speed information of the vehicle and the target wheel rotation information existing before the correction.

10. The system according to any one of claims 1 to 9, wherein the motor control unit is configured to:

    determine, by querying a preset mapping relationship between wheel rotation information and a drive electrical signal, a target drive electrical signal corresponding to the target wheel rotation information;
    query a preset transition gradient table based on the target drive electrical signal and a current drive electrical signal of the motor, and determine transition drive electrical signals needed for converting the current drive electrical signal of the motor into the target drive electrical signal; and
    sequentially send the transition drive electrical signals to the motor.

11. The system according to claim 10, wherein the preset transition gradient table comprises a transition gradient table corresponding to the first mode and a transition gradient table corresponding to the second mode; and
the motor control unit is configured to:
query, based on the target drive electrical signal and the current drive electrical signal of the motor, a transition gradient table corresponding to the travel mode of the vehicle, and determine the transition drive electrical signals.

12. The system according to any one of claims 1 to 11, further comprising a wheel sensor, wherein

    the main control unit is further configured to: after the vehicle ends parking, determine target torque information corresponding to the target wheel rotation information, and send the target torque information to the motor control unit;
    the motor control unit is further configured to send a third drive electrical signal to the motor based on the target torque information;
    the wheel sensor is configured to send collected rotation information of the wheel to the main control unit; and
    the main control unit is further configured to correct the target torque information based on the rotation information of the wheel and the target wheel rotation information, and send the corrected target torque information to the motor control unit.

13. The system according to claim 12, wherein the vehicle is configured to be in the automatic parking assist mode; and
the main control unit is configured to:
when determining that a status of the vehicle meets at least one of the following conditions, determine that the vehicle ends parking:

an opening degree of an accelerator pedal is greater than 0; an opening degree of a brake pedal is greater than a preset opening degree threshold, and the preset opening degree threshold is greater than 0; a steering wheel is turned; a parking position is used; and a parking end request is received.

14. The system according to claim 12, wherein the vehicle is configured to be in the manual parking mode; and the main control unit is configured to:
when determining that the status of the vehicle meets at least one of the following conditions, determine that the vehicle ends parking:
the vehicle speed is not lower than the preset vehicle speed, the rotational speed of the motor is not lower than the preset rotational speed, the torque requested by the driver is not less than the torque threshold, the change rate of the torque requested by the driver is not less than the first change rate threshold, the opening degree of the accelerator pedal is not less than the first opening degree threshold, the change rate of the opening degree of the accelerator pedal is not less than the second change rate threshold, the opening degree of the brake pedal is not greater than the second opening degree threshold, and the change rate of the opening degree of the brake pedal is not less than the third change rate threshold.

15. A parking control method, comprising:

    sending a first control signal to a motor control unit during parking of a vehicle, wherein the first control signal is used to indicate the motor control unit to switch to a rotational speed or rotation angle control mode; and
    sending a second control signal to the motor control unit when the vehicle is not parking, wherein the second control signal is used to indicate the motor control unit to switch to a torque control mode.

16. The method according to claim 15, wherein the vehicle is configured to be in an automatic parking assist mode; and sending the first control signal to the motor control unit during parking of the vehicle comprises:
receiving an automatic parking assist request, and sending the first control signal to the motor control unit.

17. The method according to claim 15, wherein the vehicle is configured to be in a manual parking mode; and sending the first control signal to the motor control unit during parking of the vehicle comprises:
sending the first control signal to the motor control unit when it is determined that a status of the vehicle meets at least one of the following conditions:
a vehicle speed is lower than a preset vehicle speed; a rotational speed of the motor is lower than a preset rotational speed; a torque requested by a driver is less than a torque threshold; a change rate of the torque requested by the driver is less than a first change rate threshold; an opening degree of an accelerator pedal is less than a first opening degree threshold; a change rate of the opening degree of the accelerator pedal is less than a second change rate threshold; an opening degree of a brake pedal is greater than a second opening degree threshold; and a change rate of the opening degree of the brake pedal is less than a third change rate threshold.

18. The method according to any one of claims 15 to 17, wherein sending the second control signal to the motor control unit when the vehicle is not parking comprises:
sending the second control signal to the motor control unit after the vehicle ends parking.

19. The method according to claim 18, wherein the vehicle is configured to be in the automatic parking assist mode; and

    sending the second control signal to the motor control unit after the vehicle ends parking comprises:
    sending the second control signal to the motor control unit when it is determined that a status of the vehicle meets at least one of the following conditions:
    an opening degree of an accelerator pedal is greater than 0; an opening degree of a brake pedal is greater than a preset opening degree threshold, and the preset opening degree threshold is greater than 0; a steering wheel is turned; a parking position is used; and a parking end request is received.

20. The method according to claim 18, wherein the vehicle is configured to be in the manual parking mode; and sending the second control signal to the motor control unit after the vehicle ends parking comprises:
sending the second control signal to the motor control unit when it is determined that the status of the vehicle meets at least one of the following conditions:
the vehicle speed is not lower than the preset vehicle speed, the rotational speed of the motor is not lower than the preset rotational speed, the torque requested by the driver is not less than the torque threshold, the change rate of the torque requested by the driver is not less than the first change rate threshold, the opening degree of the accelerator pedal is not less than the first opening degree threshold, the change rate of the opening degree of the accelerator pedal is not less than the second change rate threshold, the opening degree of the brake pedal is not greater than the second opening degree threshold, and the change rate of the opening degree of the brake pedal is not less than the third change rate threshold.

21. A parking control apparatus, comprising a processor, a transceiver, and a memory, wherein the memory stores computer program instructions, and the processor runs the computer program instructions, to invoke the transceiver to implement the method according to any one of claims 15 to 20.

22. A parking control apparatus, comprising a module or a unit for performing the method according to any one of claims 15 to 20.

23. An electronic device, comprising the parking control system according to any one of claims 1 to 14.

24. A computer-readable storage medium, wherein the computer-readable storage medium stores a computer program, and when the computer program is run, the method according to any one of claims 15 to 20 is implemented.

25. A computer program product, wherein when the computer program product runs on a processor, the method according to any one of claims 15 to 20 is implemented.

Speed bump

Vehicle A

Vehicle 1

Target
parking
space

Vehicle 2

Occupied

Occupied

FIG. 1

Parking control system 200

Main control unit 201

Target torque

Motor control unit 202

Drive electrical signal

Motor 203

Wheel sensor 204

Transmission system 11

Vehicle speed

Wheel 12

FIG. 2

FIG. 3

| Main control<br>unit 201 | Motor control<br>unit 202 | Motor 203 | Motor sensor<br>205 |
|---|---|---|---|

401: Send target wheel
rotation information during
parking of a vehicle

402: Send a first drive
electrical signal based on
the target wheel rotation
information

403: Motor rotation information

404: Send a second drive
electrical signal based on
the motor rotation
information and the target
wheel rotation information

FIG. 4

| Main control unit 201 | Motor control unit 202 | Motor 203 | Motor sensor 205 |
|---|---|---|---|

501: Receive an automatic parking assist request, and send target wheel rotation information

502: Send a first drive electrical signal based on the target wheel rotation information

503: Motor rotation information

504: Send a second drive electrical signal based on the motor rotation information and the target wheel rotation information

505: Determine that automatic parking assist ends, and switch back to a torque control mode

FIG. 5

| Main control unit 201 | Motor control unit 202 | Motor 203 | Motor sensor 205 |
|---|---|---|---|

601: When a current status of a vehicle meets a parking condition, determine target wheel rotation information corresponding to a current opening degree of a vehicle pedal

602: Target wheel rotation information

603: Send a first drive electrical signal based on the target wheel rotation information

604: Motor rotation information

605: Send a second drive electrical signal based on the motor rotation information and the target wheel rotation information

606: When a current status of the vehicle meets a parking end condition, switch back to a torque control mode

FIG. 6

| Main control unit 201 | Motor control unit 202 | Motor 203 | Motor sensor 205 | Wheel sensor 204 |
|---|---|---|---|---|

701: Send a first control signal during parking of a vehicle

702: Switch to a rotational speed or rotation angle control mode based on the first control signal

703: Send target wheel rotation information

704: Send a first drive electrical signal based on the target wheel rotation information

705: Motor rotation information

706: Send a second drive electrical signal based on the motor rotation information and the target wheel rotation information

707: Send a second control signal when the vehicle is not parking

708: Switch to a torque control mode based on the second control signal

709: Send a target torque

710: Send a third drive electrical signal based on the target torque

711: Actual wheel rotation information

712: Send a corrected target torque based on the actual wheel rotation information and the target wheel rotation information

713: Send a fourth drive electrical signal based on the corrected target torque

FIG. 7

40

800

802                                   803

Memory                          Transceiver

801

Processor

FIG. 8

900

Parking control apparatus

901

Processing unit

902

Transceiver unit

FIG. 9

# INTERNATIONAL SEARCH REPORT

| International application No. |
| --- |
| **PCT/CN2024/091778** |

| A. | CLASSIFICATION OF SUBJECT MATTER |
| --- | --- |

B60W 30/06(2006.01)i; B60W 10/08(2006.01)i; B60W 10/20(2006.01)i

According to International Patent Classification (IPC) or to both national classification and IPC

| B. | FIELDS SEARCHED |
| --- | --- |

Minimum documentation searched (classification system followed by classification symbols)

IPC: B60W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 华为技术有限公司, 刘瀚文, 泊车, 电机, 电动机, 马达, 传感器, 转速, 速度, 转角, 转矩, 扭矩, park, motor, sensor, speed, velocity, angle, torque

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2006296135 A (TOYOTA MOTOR CORP.) 26 October 2006 (2006-10-26) description, paragraphs [0011]-[0050], and figures 1-7 | 1-7, 9, 10, 12-25 |
| Y | JP 2006296135 A (TOYOTA MOTOR CORP.) 26 October 2006 (2006-10-26) description, paragraphs [0011]-[0050], and figures 1-7 | 8-14, 23 |
| Y | CN 115520030 A (BOSCH AUTOMOTIVE PRODUCTS (SUZHOU) CO., LTD.) 27 December 2022 (2022-12-27) description, paragraph [0019] | 8-14, 23 |
| A | DE 102021201276 A1 (VITESCO TECHNOLOGIES GMBH) 11 August 2022 (2022-08-11) entire document | 1-25 |
| A | CN 106004515 A (GUANGZHOU CHENGXING ZHIDONG MOTORS TECHNOLOGY CO., LTD.) 12 October 2016 (2016-10-12) entire document | 1-25 |
| A | CN 105015544 A (JIANGSU UNIVERSITY) 04 November 2015 (2015-11-04) entire document | 1-25 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 July 2024** | **16 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| JP | 2006296135 | A | 26 October 2006 | None | | | |
| CN | 115520030 | A | 27 December 2022 | None | | | |
| DE | 102021201276 | A1 | 11 August 2022 | None | | | |
| CN | 106004515 | A | 12 October 2016 | CN | 106004515 | B | 10 April 2018 |
| CN | 105015544 | A | 04 November 2015 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310556765